# FASCICULE DE BREVET EUROPEEN

(11) **EP 3 108 749 B1**
(45) Date de publication et mention de la délivrance du brevet: **15.08.2018**
(21) Numéro de dépôt: 16175315.7
(22) Date de dépôt: 20.06.2016
(51) Int. Cl.: A01K 97/08, A01K 97/10

(54) **SYSTEME DE PORTAGE POUR CANNES A PECHE, PIQUES ET ACCESSOIRES, ET PROCÉDÉ D'ACCROCHAGE SUR UN TEL SYSTÈME**
TRAGESYSTEM FÜR ANGELRUTEN, RUTENHALTER UND ZUBEHÖR, UND VERFAHREN ZUM HÄNGEN AN EINEM SOLCHEN SYSTEM
CARRYING SYSTEM FOR FISHING RODS, BANK STICKS AND ACCESSORIES, AND METHOD OF HANGING ON SUCH A SYSTEM

(30) Priorité: 23.06.2015 FR 1501296
(43) Date de publication de la demande: 28.12.2016
(73) Titulaire: Bernardini, Jean-René, 83000 Toulon (FR); Mattei, Dominique, 83000 Toulon (FR)
(72) Inventeur: Bernardini, Jean-René, 83000 Toulon (FR); Mattei, Dominique, 83000 Toulon (FR)
(74) Mandataire: GPI & Associés

(56) Documents cités:
- DE-U1-202007 017 027
- JP-A- H11 178 495
- JP-U- H04 117 582
- US-A- 4 628 628
- US-A1- 2007 278 166

## Description

L'invention est généralement du domaine technique des accessoires de pêche de loisirs ou de pêche sportive.

L'invention vise notamment les supports de cannes à pêche et/ou de piques de maintien. L'invention vise en outre les accessoires formant conteneurs ou boîtiers pour ce domaine. En particulier, l'invention porte sur un système de portage pour au moins une canne et/ou une pique et/ou un accessoire pour la pêche.

Dans ce domaine, de nombreux problèmes techniques restent irrésolus ou incomplètement satisfaits.

Ainsi, les personnes pratiquant la pêche de loisirs ou sportive doivent transporter une ou plusieurs cannes à pêche et/ou diverses piques et/ou accessoires, à proximité du plan d'eau (par exemple: bord de mer/lac/canal/rivière) où elles désirent pêcher.

Ce transport est en général effectué manuellement, par portage humain des cannes, piques et/ou accessoires. Il n'existe pas actuellement de système de portage des cannes qui rende les manipulations aisées, pratiques et peu harassantes, de par une légèreté, une forme, une modularité et un encombrement ergonomiques.

Bien que souvent les cannes à pêche soient télescopiques, leur transport s'avère fastidieux, notamment du fait de leur longueur qui les rend encombrantes. De plus, l'embout supérieur des cannes étant pointu, il peut rendre leur manipulation périlleuse, voire dangereuse.

Lorsqu'on évoque ici des piques de maintien, il s'agit de piques de « surfcasting » c'est-à-dire pour le maintien en position de pêche, de cannes de pêche à la ligne dans la vague. En aparté, des clarifications sur le « surfcasting » sont disponibles à ce lien : http://fr.wikipedia.org/wiki/Surf casting . Souvent, ces piques ne sont pas télescopiques et leur embout inférieur pointu peut aussi rendre leur manipulation périlleuse/dangereuse. Il serait donc utile de pouvoir disposer d'un système de portage qui minimise les risques durant les manipulations et transports des cannes/piques/accessoires, tout en assurant un maintien groupé, sûr et compact de ceux-ci.

Ces manipulations et transports sont d'autant plus embarrassants que le nombre de cannes, piques et/ou accessoires est important. Par exemple, pour la pêche à la ligne dans la vague (« surfcasting »), il est utile de transporter les cannes et autant de piques. Donc, il serait avantageux de disposer d'un système de portage qui permette les manipulations et transports d'un nombre suffisant de cannes, piques et/ou accessoires, et qui s'adapte aisément aux formes et volumes de celles-ci.

Aussi, pendant la pêche classique dans l'attente d'une touche, il est astreignant de devoir maintenir les cannes à la main de manière stable, pendant des périodes de temps parfois longues. A l'instar du « surfcasting », où chaque canne à pêche doit être positionnée au sol de manière stable en la faisant reposer au sommet d'une pique de « surfcasting », qui doit être plantée dans le sol à proximité d'un plan d'eau où il est possible de pêcher « à la vague », il conviendrait pour la pêche classique de pouvoir disposer d'un système de portage des cannes qui assure en outre cette fonction de maintien stable.

De plus, contrairement aux housses classiques qui ne sont plus utiles après transport jusqu'au plan d'eau, il serait avantageux qu'un système de portage de cannes/piques/accessoires puisse fournir des fonctions complémentaires, par exemple de support, de maintien et de mise à disposition d'accessoires, etc.

Selon le type de pêche de loisir pratiqué, mais aussi selon l'écosystème du plan d'eau et également les saisons ou périodes de pêche, le nombre, la forme et le type d'équipements de pêche varie. De fait, d'une séance de pêche à l'autre, une personne pratiquant cette activité peut avoir besoin de s'équiper de cannes/piques/accessoires distincts. Disposer d'un système de portage unique mais modulaire en fonction des équipements spécifiquement utiles à une séance de pêche prévue, serait idéal.

Outre le transport du matériel de pêche, la pratique de cette activité pose également divers problèmes techniques. Par exemple, les housses classiques à l'intérieur desquelles il est possible de placer des cannes/piques/accessoires doivent être couchées au sol afin de pouvoir accéder à leur contenu. Ceci est mal pratique et peut être gênant sur un sol sale, humide ou meuble. Il conviendrait donc de pouvoir disposer d'un système de portage qui présente une certaine rigidité et qui puisse tenir en position relevée et rapprocher les cannes/piques/accessoires du pratiquant, lorsqu'il est nécessaire d'y accéder.

Un autre problème est la difficulté relative de mise en place des cannes/piques/accessoires, depuis leur position de transport sur le système de portage vers leur position d'emploi, et inversement. Un autre besoin insatisfait persiste donc, pour un système de portage sûr et depuis lequel les accrochages/décrochages soient aisés, rapides et protégés de risques de séparation intempestive.

En outre, il est important que les cannes/piques/accessoires ne soient pas abîmés lors de leur manipulation, notamment en ce qui concerne les moulinets qui sont des objets relativement fragiles et coûteux. Dans le même ordre d'idées, il est important que les cannes/piques/accessoires sur un système de portage, n'abîment ou heurtent leur entourage (qu'il s'agisse d'objets, de personnes ou d'animaux) lors de leur manipulation. De fait, un système de portage qui offrirait une protection efficace est souhaitable.

Enfin, s'agissant d'une activité de loisirs, il est souhaitable que le système de portage soit peu coûteux, de structure propre à être réalisée en séries industriellement, tout en pouvant être fabriqué en divers matériaux et par des méthodes de production variées. Il n'existe pas à l'heure actuelle, de système de portage qui répondrait à ces critères.

Divers documents du domaine des systèmes porteurs pour cannes à pêches de loisirs ont été pris en considération.

Par ailleurs, le document US2014125075 décrit un support multicannes à pêches avec une longue poignée rigide de transport. Ce support est rigide et comporte deux plaques de base à encoches qui sont montées sur la poignée rigide, à des emplacements fixes prédéfinis. Des tubes rigides de réception de cannes sont montés à des emplacements fixes prédéfinis longitudinalement entre les deux plaques de base et à la périphérie externe de ces plaques. Sur une plaque de base supérieure, des pieds sont articulés pour maintenir le support et les cannes logées dans les tubes de réception.

Bien qu'il présente des avantages, ce support multicannes doit être déposé sur le sol pour son chargement/déchargement. Cinq cannes au maximum peuvent être accrochées de manière peu pratique par enfilement chacune dans un tube. Ce support multicannes est d'encombrement relativement volumineux et donc peu pratique pour le transport. Il ne se transporte que d'une seule façon, à la manière d'une valise à bout de bras, ce qui peut être astreignant selon la charge. Aucun agencement pour accessoires/piques n'est prévu. Lors du transport, les pointes des cannes à pêche sont exposées, ce qui peut entrainer leur altération voire des incidents sur les personnes/objets environnants. Une seule position proche du sol est possible avec les pieds articulés.

Le document JP2002325535 décrit un support réglable à pied vertical pour plusieurs cannes montées sur un bras transversal.

Le document JP2005253391 décrit un guide d'ajustement de niveau pour une ligne de canne à pêche.

Le document JP2006042718 décrit un support réglable à pied vertical pour une seule canne et à montage réglable le long d'un rail de réception parallèle au pied vertical.

D'autres documents ont été considérés, à savoir : DE202007017027, CN203801531, CN203775960, CN203775937, CN103461234, CN203349022, CN103444669, CN103416358, CN203597262, CN103798201, CN203593144, CN203416736, CN203388125, CN203505332, JPH11178495, JP5624164, JP2014140334, JP2014155460, JPH04117582, KR20130122050, KR101434819, KR101381456, KR20140034570, TWM467311, TW269626, TWM479020, UA78954U, US4628628, US2007278166 et US2014196352.

L'invention vise à résoudre les problèmes rencontrés avec les systèmes de portage actuels, notamment en termes de facilité de manipulation, de praticité/variété/modularité des fonctionnalités offertes, de sécurité de l'utilisateur et de son entourage, et de possibilités de production industrielle à coût attractif.

A cette fin, l'invention se présente sous divers objets.

Un objet de l'invention est un système de portage pour accessoires de pêche.

Ce système de portage comporte au moins: un tuteur rigide profilé, une semelle de piétement et une pluralité de platines intermédiaires ; la semelle de piétement et les platines intermédiaires étant toutes étendues depuis une même face avant du tuteur rigide profilé, suivant une direction frontale du système de portage.

Le tuteur rigide profilé est étendu suivant une direction d'élévation du système de portage et comporte une extrémité d'élévation d'embase et une extrémité d'élévation sommitale ; le tuteur rigide profilé comprend une glissière concave profilée entre les extrémités d'élévation d'embase et sommitale.

La semelle de piétement est étendue perpendiculairement à la direction d'élévation depuis l'extrémité d'élévation d'embase et est rigidement fixée au tuteur rigide profilé.

Chaque platine intermédiaire est planaire et étendue perpendiculairement à la direction d'élévation et de manière réglable suivant la direction d'élévation, entre la semelle de piétement et l'extrémité d'élévation sommitale, avec au moins:
- une platine intermédiaire d'embase qui est rigidement fixée sur une face supérieure de la semelle de piétement, cette face supérieure comprenant au moins deux logements de réception d'embase, chaque logement de réception d'embase étant à une localisation prédéterminée suivant la direction frontale et une direction transversale du système de portage; chaque logement de réception étant agencé l'un d'une part et l'autre d'autre part de la glissière concave profilée suivant la direction transversale,
- une platine intermédiaire d'enfilement d'embouts qui est rigidement fixée sur la glissière concave profilée par un agencement réglable inférieur de réglage en élévation; la platine intermédiaire d'enfilement est pourvue d'au moins deux orifices traversants, respectivement au droit d'un logement de réception d'embase correspondant,
- une platine intermédiaire de blocage qui est rigidement fixée sur la glissière par un agencement réglable médian de réglage en élévation; cette platine étant pourvue d'au moins deux ouvertures latérales chacune respectivement au dessus et décalée frontalement et transversalement d'un logement et en regard d'un orifice traversant correspondant; chaque ouverture latérale étant d'axe étendu suivant la direction d'élévation, est respectivement agencée à une partie d'extrémité transversale de la platine intermédiaire de blocage et présente un dispositif en étau élastiquement déformable à passage transversal débouchant vers l'extérieur de la platine intermédiaire de blocage, suivant la direction transversale; la platine intermédiaire de blocage possédant au moins deux plages d'appui supérieures, chacune dans la périphérie d'une ouverture latérale.

Selon une réalisation, la platine intermédiaire de confinement d'embouts est rigidement fixée sur la glissière concave profilée par un agencement réglable supérieur de réglage en élévation. La platine intermédiaire de confinement d'embouts est pourvue d'au moins deux gorges latérales de protection d'embout. Chaque gorge latérale de protection d'embout est respectivement en regard d'un logement de réception d'embout et d'axe étendu suivant la direction d'élévation. De plus, chaque gorge latérale de protection d'embout est respectivement agencée à un flanc transversal de la platine intermédiaire de confinement d'embouts en formant un réceptacle arqué débouchant vers l'extérieur du système de portage, suivant la direction transversale.

Selon une réalisation, le tuteur rigide profilé comprend au moins une sangle de portage solidaire d'une part de la semelle de piétement et d'autre part de l'agencement réglable supérieur ; la sangle de portage étant rendue solidaire par attachement à la semelle de piétement et à l'agencement réglable supérieur à une face arrière du tuteur rigide profilé, opposée aux platines intermédiaires suivant la direction frontale.

Selon une réalisation, la semelle de piétement comporte à une face inférieure, au moins trois pieds saillants vers l'extérieur du système de portage, suivant la direction d'élévation.

Selon une réalisation, la platine intermédiaire d'embase comporte trois logements de réception d'embase, agencés en triangle dont la base est parallèle à la direction transversale et dont la pointe opposée à la base suivant la direction frontale définit un logement de réception d'embase central, en avant de la base et opposé au tuteur rigide profilé suivant la direction frontale.

Selon une réalisation, la platine intermédiaire d'enfilement comporte trois orifices traversants en regard de trois logements de réception d'embase, agencés sur la platine intermédiaire d'embase en triangle dont la base est parallèle à la direction transversale.

Selon une réalisation, la platine intermédiaire de blocage est en forme de « T » perpendiculairement à la direction d'élévation et comporte au moins quatre ouvertures latérales, dont deux ouvertures latérales à dispositif en étau élastiquement déformable et passage transversal débouchant vers l'extérieur transversalement, ainsi que deux ouvertures latérales centrales alignées suivant la direction frontale.

Selon une réalisation, chaque dispositif en étau élastiquement déformable à passage transversal débouchant de la platine intermédiaire de blocage comporte un fond en « V » venu de matière avec la platine intermédiaire de blocage et deux pattes en crochet élastiquement déformables, l'une en regard de l'autre dans un plan médian frontal et transversal de la platine intermédiaire de blocage, avec le passage transversal débouchant dont la dimension suivant la direction frontale est inférieure à un espacement de passage correspondant entre une extrémité avant et une extrémité arrière du fond en « V ».

Selon une réalisation, la platine intermédiaire de blocage est en forme de « T » perpendiculairement à la direction d'élévation et comporte au moins deux ouvertures latérales avant en « V », de part et d'autre transversalement du tuteur rigide profilé et débouchant à une face transversale avant de la platine intermédiaire de blocage en « T ».

Selon une réalisation, au moins une platine intermédiaire d'enfilement et une platine intermédiaire de blocage comportant un gabarit en « U » dont une base inférieure et rigidement fixée à une face supérieure de la platine intermédiaire correspondante et dont deux branches parallèles sont étendues suivant la direction d'élévation et écartées l'une de l'autre suivant la direction transversale, tandis que le tuteur rigide profilé comporte à distance l'un de l'autre et du gabarit en « U », au moins deux boucles élastiquement déformables, pour l'accrochage sur le système de portage d'un boîtier prismatique formant accessoire de pêche.

Selon une réalisation, le système de portage comprend une platine intermédiaire de confinement d'embouts pourvue de deux gorges latérales de protection d'embout et d'une gorge centrale de protection d'embout située entre les deux gorges latérales de protection d'embout et débouchant à une face transversale avant de la platine intermédiaire de confinement d'embouts, les deux gorges latérales de protection d'embout étant inscrites dans un profil circulaire et la gorge centrale de protection d'embout étant inscrite dans un profil allongé suivant la direction frontale depuis la face avant de la platine intermédiaire de confinement d'embouts et définissant un fond biplan convexe vers l'avant de cette gorge centrale de protection d'embout.

Selon une réalisation, au moins l'un des agencements réglables inférieur, médian et supérieur de réglage en élévation comporte un corps de support de la platine intermédiaire correspondante, et un montage à came et molette dont la came est en prise coulissante par défaut avec la glissière concave profilée et dont la molette assure par vissage le plaquage en pression et l'immobilisation du montage par rapport à la glissière concave profilée, en une position de blocage le long de la glissière concave profilée, entre les extrémités d'élévation d'embase et sommitale.

Selon une réalisation, le système de portage comporte des structures de fixation rigide et amovible d'un cadre de maintien au sol sur une face arrière du tuteur rigide profilé, ce cadre de maintien au sol comportant au moins :
- une colonne d'élévation centrale,
- un bras transversal sensiblement au niveau de l'extrémité d'élévation sommitale au sommet de la colonne d'élévation centrale,
- deux béquilles déplaçables et extensibles, montées sur rotules à des extrémités latérales du bras transversal, et,
- deux tringles à encoches creuses, rigidement montées à une extrémité haute et de part et d'autre transversalement, de la colonne d'élévation centrale.
Il est également divulgué une pique apte à être montée sur le système de portage évoqué.

Selon une réalisation, la pique présente à une extrémité supérieure de sa tige, un collier en fer à cheval, ouvert à l'opposé suivant la direction frontale et pourvu en périphérie extérieure et suivant la direction transversale, d'un doigt cylindrique en saillie. La pique présente également à un emplacement médian en élévation de sa tige, un collier circulaire définissant une goulette close qui est en regard avec un espace de passage de pique à l'intérieur du collier en fer à cheval ouvert ; le doigt en saillie cylindrique étant complémentaire à un guidage complémentaire d'un boîtier prismatique formant accessoire de pêche ; la pique et ce boîtier prismatique pouvant être intégrés au système de portage. Un autre objet de l'invention est un procédé d'accrochage sur un système de portage tel qu'évoqué, d'une canne à pêche ou pique de « surfcasting ».

Selon ce procédé, la canne ou pique est glissée suivant un angle d'approche à travers l'un des orifices traversants de la platine intermédiaire d'enfilement puis une embase inférieure de cette canne est reçue dans l'un des logements de réception d'embase correspondant de la platine intermédiaire d'embase, et la canne est redressée parallèlement à la direction d'élévation pour être logée dans l'un des dispositif en étau souple correspondant de la platine intermédiaire de blocage, tandis qu'une extrémité supérieure de cette canne est reçue dans une des deux gorges latérales correspondantes de la platine intermédiaire de confinement d'embouts.

L'invention et ses avantages apparaissent avec plus de précision dans la description détaillée qui suit d'exemples donnés à titre illustratif uniquement, en référence aux figures annexées, dans lesquelles:
- la figure 1 est une vue d'ensemble en perspective d'une réalisation de système de portage selon l'invention, en position redressée et posée au sol sur les pieds d'une semelle de piétement, avec deux cannes, trois piques non-télescopiques ainsi que deux boîtiers prismatiques d'accessoires qui sont maintenus solidaires sur le système et immobilisés par celui-ci. Des structures souples de transport sous forme de sangle sont attachées à l'arrière du système, pour son portage.
- la figure 2 une vue d'ensemble en élévation frontale d'une réalisation de système de portage selon l'invention, montré nu et en position redressée, avec de bas en haut, une semelle à pieds et roulettes, une platine d'embase, une platine d'enfilement, une platine de blocage et une platine de confinement, ces platines étant chacune montée le long d'un tuteur rigide profilé.
- la figure 3 est une vue d'ensemble en perspective d'élévation transversale du système de portage nu, qui est similaire à celui de la figure 2, avec une platine de blocage à étau d'agrafage élastique à zone de raccordement frontalement étendue.
- la figure 4 est une vue en plan transversal et frontal d'une réalisation selon l'invention de platine de blocage à étau d'agrafage élastique pour cannes/piques, cette platine ayant une zone de raccordement frontalement compacte.
- la figure 5 est une vue d'ensemble en perspective illustrant une étape d'insertion inclinée - transversalement et/ou frontalement - d'une canne dans un orifice traversant d'une platine intermédiaire d'enfilement selon l'invention.
- la figure 6 est une vue d'ensemble en perspective illustrant une étape de redressement transversal et/ou frontal d'un embout supérieur de canne vers un passage transversal débouchant d'une platine intermédiaire de blocage du système de portage selon l'invention.
- la figure 7 est une vue d'ensemble en perspective illustrant une étape de blocage par redressement final et enfoncement transversal dans un dispositif en étau déformable d'une autre canne dans le système de portage des figures 6 et 7.
- la figure 8 est une vue dédoublée en perspective d'un cadre de maintien au sol pour système de portage selon l'invention, des tringles à encoches creuses saillant transversalement d'une colonne d'élévation centrale de ce cadre ; à gauche la colonne d'élévation centrale du cadre est attachée au tuteur du système et des béquilles déplaçables sont étendues et inclinées transversalement et/ou frontalement. A droite, le cadre seul est détaché du reste du système et les béquilles sont rétractée et rabattues contre la colonne d'élévation centrale;.
- la figure 9 est une vue partielle en perspective d'une pique du système de portage selon l'invention, apte à être intégrée au système et possédant un collier en fer à cheval et un doigt cylindrique pour le montage d'un boîtier.
- la figure 10 est une vue similaire à la figure 9, où un boîtier est monté sur le doigt cylindrique du collier en fer à cheval de la pique.
- la figure 11 est une vue en perspective au sol d'un système de portage selon l'invention, avec un cadre de maintien au sol dont les béquilles sont étendues vers l'avant et transversalement, deux cannes à pêches reposant chacune sur une encoche creuse d'une tringle en saillie transversalement.
- la figure 12 est une vue en perspective d'un système selon l'invention, porté en bandoulière, à la manière d'un sac de sport ou de golf, par un utilisateur humain à l'aide d'une sangle reliée au tuteur, avec des cannes, piques et boîtier attenants.
- la figure 13 est une vue partielle en perspective frontale et transversale, qui montre le montage/démontage sur un système de portage selon l'invention, d'un boîtier prismatique formant accessoire, un autre boîtier étant déjà monté et retenu par des liens élastiques.
- la figure 14 est une vue en perspective plongeante en élévation de dessus, depuis une position frontalement avancée, d'un système de portage selon l'invention, qui montre la coïncidence en élévation de séries de logements et/ou orifices et/ou ouvertures et/ou passages, afin d'offrir des emplacements de montage et fixation de cannes et/ou piques sur le système.
- la figure 15 est une vue en perspective latérale de dessus d'un système de portage selon l'invention, avec des logements et/ou orifices et/ou ouvertures et/ou passages en coïncidence par séries en alignement d'élévation.

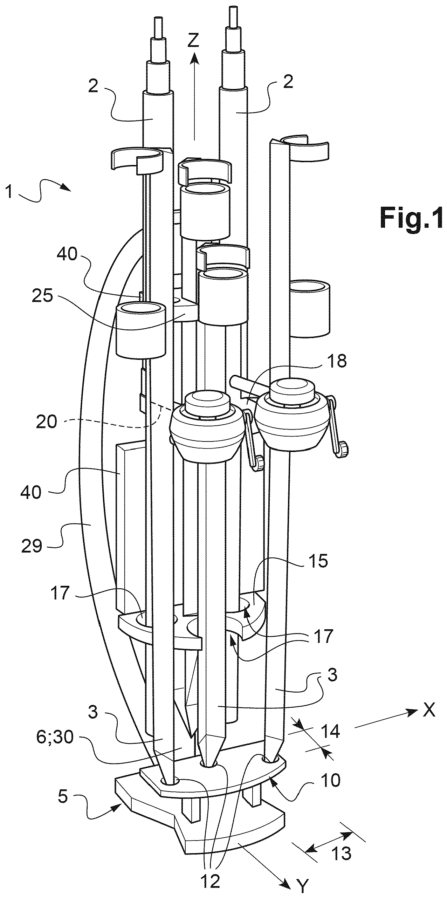

Dans la description détaillée d'exemples de l'invention qui suit, on remarque sur les figures 1 à 12 trois directions X, Y et Z perpendiculaires les unes par rapport aux autres pour former un repère orthogonal.

La direction X représente l'axe transversal des structures illustrées alors qu'une autre direction Y en représente l'axe frontal. La direction transversale X définit latéralement les structures (droite/gauche) et est considérée parallèle au sol nonobstant la position effective des structures.

La direction frontale Y est orientée perpendiculairement à la direction transversale X et définit les profondeurs (avant/arrière) des structures. La direction frontale Y est donc également parallèle au sol nonobstant les positions effectives des structures.

Une troisième direction Z (perpendiculaire à X et Y) est dite d'élévation et correspond aux hauteurs ou dimensions et emplacements d'élévation (haut - sommet - embout/bas - base - embase) des structures représentées.

Sur les figures 1 à 15, la référence 1 désigne un système de portage pour la pêche de loisirs. Comme illustré sur la figure 1, ce système 1 vise le portage d'au moins une canne à pêche 2 et/ou une pique 3 de maintien ou « surfcasting » et/ou un conteneur ou boîtier 40, formant un accessoire 4 pour la pêche. Ici, le système 1 porte deux cannes 2, trois piques 3 et deux boîtiers 40. D'autres réalisations peuvent transporter deux, trois ou quatre cannes/piques.

Sur les figures, ce système de portage 1 comporte notamment:
- un tuteur rigide profilé 6 avec une face avant 6A,
- une semelle de piétement 5, et,
- une pluralité de platines intermédiaires, ici au nombre de quatre, comme illustré en 10, 15, 18 et 25.

Dans les réalisations illustrées, le tuteur rigide profilé 6 est un tronçon de profilé métallique à section rectangulaire dans un plan transversal et frontal.

Dans la réalisation de la figure 1, il s'agit d'un tuteur rigide profilé 6 en aluminium ou en acier, dont la face avant 6A ou largeur mesure de 30mm à 70mm suivant la direction transversale Y, tandis que ses côtés frontaux mesurent de 10mm à 40mm suivant la direction frontale X. Suivant la direction d'élévation, le tuteur rigide profilé 6 mesure de 700mm à 1200mm, selon les réalisations. Ce tuteur rigide profilé 6 comporte également une face arrière 30.

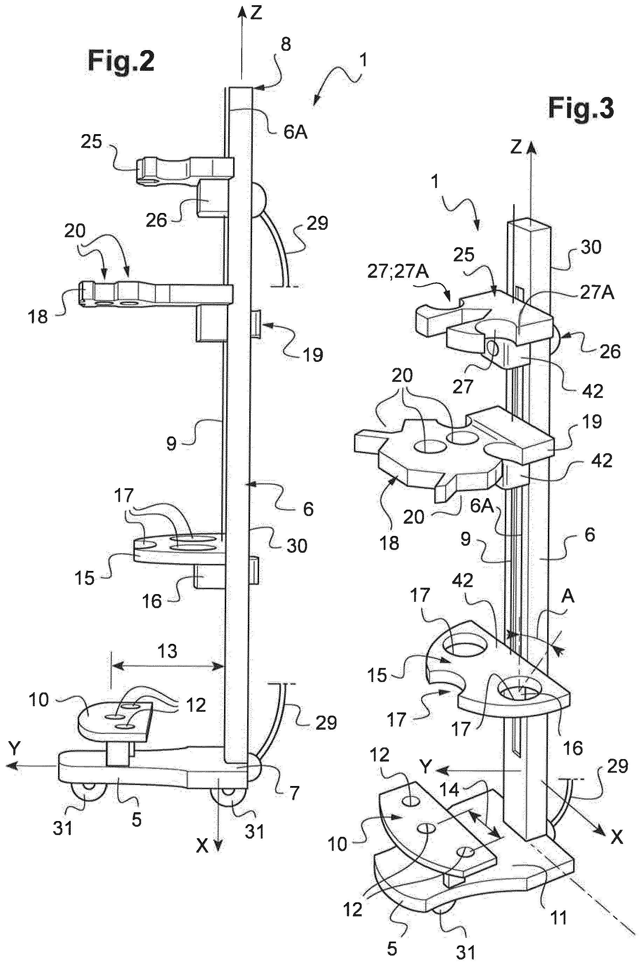

La semelle 5 et les platines intermédiaires 10, 15, 18 et 25 sont ici toutes étendues en profondeur et transversalement d'un seul côté du tuteur 6 depuis la face avant 6A. Sur les figures 1 et 2 par exemple, le système 1 présente de bas en haut : la semelle 5 puis les platines 10, 15, 18 et 25.

Cette semelle 5 et les platines 10, 15, 18 et 25 sont réparties suivant la direction d'élévation Z du système 1. De fait, la face arrière 30 - qui est opposée à la face avant 6A par rapport à un plan médian d'élévation transversale du tuteur 6 - est libre de tout constituant rigide de montage des cannes 2 / piques 3 / boîtiers 40 et donc fortement saillant. En d'autres termes, la semelle 5 et les platines 10, 15, 18 et 25 sont agencées frontalement du même côté avant du tuteur 6 depuis la face avant 6A de ce système 1, libérant ainsi la face arrière 30 de toute structure encombrante.

Le tuteur rigide profilé 6 est principalement étendu suivant la direction d'élévation Z du système de portage 1 et comporte une extrémité d'élévation d'embase 7 et une extrémité d'élévation sommitale 8. Ce tuteur 6 comprend en outre une glissière concave profilée 9 entre ces extrémités d'élévation 7 et 8. Dans les réalisations, une glissière concave profilée 9 est étendue sur plus de trois quarts à neuf dixièmes de la distance en élévation (Z) séparant ces extrémités 7 et 8.

Selon les réalisations, suivant la direction d'élévation Z, la glissière présente une dimension de l'ordre de 0.5 à 0.9 fois celle du tuteur 6. Par exemple, pour un tuteur de 1000mm, la glissière 9 mesure 750mm suivant la direction d'élévation Z.

La semelle de piétement 5 est étendue perpendiculairement à la direction d'élévation Z depuis l'extrémité d'élévation d'embase 7 et est rigidement fixée au tuteur rigide profilé 6 dont elle fait saillie depuis la face avant 6A. Dans les réalisations illustrées, la semelle 5 est fixée de façon démontable mais non ajustable, en bout du tuteur 6. La semelle de piétement 5 forme donc l'extrémité d'embase du système 1. Dans d'autres réalisations, la semelle 5 est ajustable.

Sur la figure 1, la semelle 5 présente un contour en « Ω » dans un plan perpendiculaire à la direction d'élévation Z. Cette semelle 5 à contour en « Ω » possède d'avant en arrière, un pavillon avant d'abord arrondi puis effilé vers l'arrière, un tronçon médian évasé pour former deux bords latéraux en branches de compas latéralement externes en continuité du pavillon avant, et un tronçon arrière à contour rectangulaire où est fixé le tuteur 6.

Sur la figure 1, la platine 10 est montée sur la semelle 5 au droit de la jonction du compas latéralement externe et du tronçon médian. La platine 10 est ici montée sur la semelle 5 par l'intermédiaire de cales de rehaussement, à distance frontalement par rapport au tuteur 6.

Sur la figure 2, chaque platine intermédiaire 10, 15, 18 et 25 est planaire et étendue perpendiculairement à la direction d'élévation Z. Contrairement à la platine 10 qui est montée à un emplacement en élévation fixe, chaque autre platine 15, 18 et 25 est rigidement fixée, mais de façon ajustable en élévation et démontable, sur le tuteur rigide profilé 6 dont elle fait saillie depuis la face avant 6A.

Dans cette réalisation, hormis la platine 10 qui n'est pas ajustable en hauteur, chaque platine intermédiaire 15, 18 et 25 est de position réglable suivant cette direction d'élévation Z, le long de la glissière 9 entre la semelle 5 et l'extrémité d'élévation sommitale 8. Bien que rigidement fixées au tuteur 6 une fois sa position choisie, chaque platine intermédiaire 10, 15, 18 et 25 est montée de manière démontable au sein du système 1.

La figure 2 montre un système 1 qui comporte:
- une platine intermédiaire d'enfilement 15,
- une platine intermédiaire de blocage 18, et,
- une platine intermédiaire de confinement d'embouts 25.

Dans les réalisations illustrées de l'invention, le système 1 comporte une platine intermédiaire d'embase 10. Toutes les réalisations de système 1 comportent au moins une platine intermédiaire d'enfilement 15 et une platine intermédiaire de blocage 18, mais selon les nécessités et modèles, des systèmes 1 ne possèdent pas de platine intermédiaire de confinement d'embouts 25.

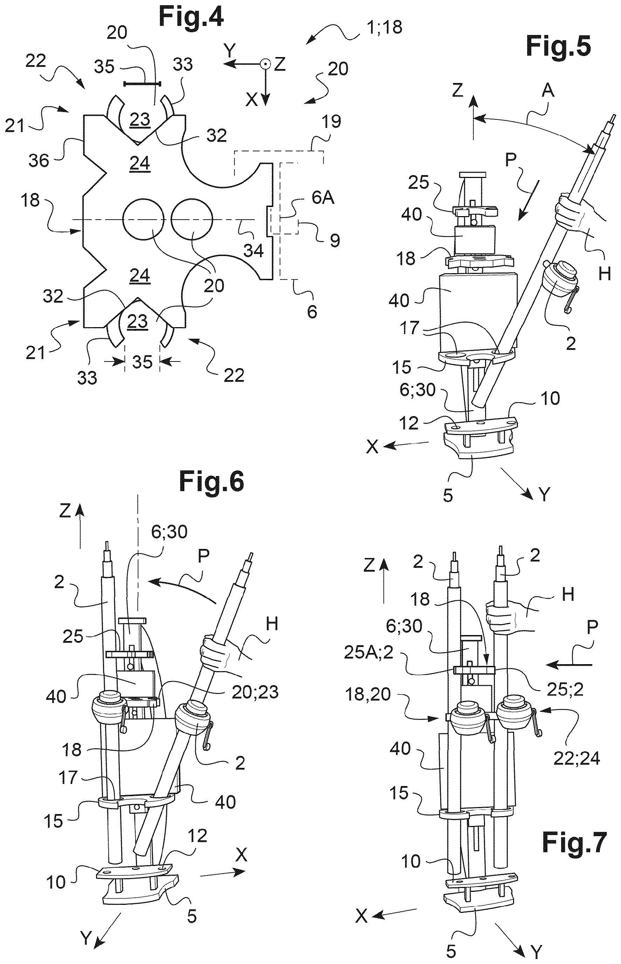

On remarque que chaque platine intermédiaire 10, 15, 18 et 25 présente suivant la direction d'élévation Z, une épaisseur qui est de l'ordre de 5mm à 40mm, par exemple de 8mm à 15mm, c'est-à-dire sensiblement supérieure à la section transversale (diamètre / largeur) usuelle d'une canne 2 / pique 3. Comparée aux platines 10, 18 et 25, la platine intermédiaire d'enfilement 15 de la figure 2 apparaît comme nettement moins épaisse en élévation (Z). Ceci vise à simplifier l'enfilement (voir figure 5 par exemple).

Dans les réalisations illustrées, le système 1 comporte une platine intermédiaire d'embase 10, qui est rigidement fixée sur une face supérieure 11 de la semelle 5. Au droit de cette face supérieure 11 visible figure 3, la platine intermédiaire d'embase 10 comprend au moins deux logements de réception d'embase 12.

Sur la figure 2, chaque logement de réception 12 est ici circulaire et de section transversale (diamètre/largeur) usuelle d'un embout de pique 3 (qui est montée ici, pointe vers le bas) ou d'une embase de canne 2 (qui serait alors montée pointe vers le haut).

Selon les réalisations, chaque logement 12 sert à recevoir et protéger un tel embout de pique 3 ou une embase de canne 2. Pour les trois piques 3, les logements 12 de la figure 2 servent de butée basse de positionnement en élévation. Il en va de même pour certains systèmes 1 où des cannes 2 viennent à leur extrémité basse dans ces logements 12.

Sur la figure 2, chaque logement de réception 12 est à une localisation prédéterminée 13 suivant la direction frontale Y et à une localisation prédéterminée 14 (figure 3) suivant la direction transversale X.

Deux logements de réception 12 sont agencés latéralement d'une part et d'autre part de la glissière concave profilée 9, suivant la direction transversale X. Un troisième logement 12, central, est agencé en regard frontalement et en avant de cette glissière 9, et donc du tuteur 6.

Des réalisations de cette platine 10 sont en matière plastique injectée, en matériau usiné/découpé (parmi lesquels : bois, synthétique, métal, composite, etc.), ou venues de moulage.

Quant à la platine d'enfilement 15 de la figure 2, elle est rigidement fixée sur la glissière concave 9 profilée par un agencement réglable inférieur 16. Cet agencement 16 permet l'ajustement de position en élévation (Z) de la platine 15.

Dans cette réalisation, la platine 15 est dédiée notamment au passage traversant de deux cannes 2, en retrait vers l'arrière frontalement, des deux logements 12 latéraux de la platine 10. Mais cette platine 15 laisse un espace de dégagement pour une pique 3 prévue pour avoir son embout dans le logement 12 central de la platine 10. Ceci rend le système 1 plus compact frontalement, en permettant de rapprocher les logements 12 et cet espace de dégagement du tuteur 6.

Selon l'invention la platine intermédiaire d'enfilement 15 est pourvue d'au moins deux orifices traversants 17. Sur la figure 2, deux sur trois orifices 17 sont destinés à recevoir des cannes 2, le troisième servant simplement d'appui et d'encadrement pour une pique 2. Cette platine 15 comportes donc trois orifices 17, dont l'un au centre, forme l'espace de dégagement et est situé au droit du logement 12 central. On verra plus loin que dans des réalisations, la platine intermédiaire d'enfilement 15 comporte d'autres types d'orifices 17.

Sur la figure 3, la platine intermédiaire de blocage 15 est en forme de demi-cercle, hormis l'échancrure avant l'orifice 17 formant l'espace de dégagement avant, dans un plan perpendiculaire à la direction Z. suivant cette direction Z, son épaisseur est par exemple de l'ordre de 10mm à 30mm, par exemple 15mm. Des réalisations de cette platine 15 sont en matière plastique injectée, en matériau usiné/découpé (parmi lesquels : bois, synthétique, métal, composite, etc.), ou venues de moulage.

On comprend que dans cette réalisation, les trois orifices 17 sont agencés de manière décalée vers l'arrière par rapport aux logements 12. De la sorte, en position sur ce système 1, les trois piques 3 viennent contre la périphérie ou contour externe de la platine intermédiaire de blocage 15 pour entourer les deux cannes 2 qui sont reçues à l'intérieur des deux autres orifices 17. Ces deux autres orifices 17 sont alignés suivant la direction transversale X, et localisés l'un d'une part et l'autre d'autre part de la glissière 9.

Dans la réalisation de la figure 3, la platine intermédiaire de blocage 18 est montée de manière ajustable sur la glissière 9 du tuteur 6, par un agencement réglable médian 19. Cet agencement 19 assure la fixation ainsi que la possibilité de choisir la position en élévation (direction Z) de la platine 18.

Sur la figure 3, la platine intermédiaire de blocage 18 est pourvue d'au moins deux ouvertures 20. En fait, la platine 18 comporte quatre ouvertures 20, deux centrales et deux latérales et débouchantes. Les ouvertures 20 latérales sont chacune disposée respectivement en regard et au droit d'un orifice 17 clos, et sont décalées par rapport à l'orifice 17 formant l'espace de dégagement avant. Ces ouvertures 20 latérales sont donc dédiées à la réception de cannes 2. Quant aux ouvertures 20 centrales, elles sont closes et alignées suivant la direction frontale Y. Toutes les ouvertures 20 sont d'axe étendu suivant la direction d'élévation Z.

Chaque ouverture 20 latérale est d'axe étendu suivant la direction d'élévation Z. Les deux ouvertures 20 latérales sont respectivement agencées à une partie d'extrémité transversale 21 de la platine 18 et présentent chacune un dispositif en étau élastiquement déformable 22, pour le blocage d'une canne sur le système 1, par un redressement finalisé.

Chaque dispositif en étau élastiquement déformable 22 possède un passage transversal débouchant 23 qui s'ouvre vers l'extérieur de la platine 18, suivant la direction transversale X.

La platine 18 de blocage possède au moins deux plages d'appui supérieures 24, chacune dans la périphérie d'une ouverture 20 latérale, de part et d'autre des ouvertures 20 centrales. Ces plages d'appui supérieures 24 servent à recevoir et immobiliser en hauteur (Z), des moulinets de cannes 2 montées dans ces ouvertures 20 latérales. De fait, ces cannes 2 peuvent avoir leur embase à distance de la platine 15, lorsqu'elles sont disposées sur le système 1.

Sur la figure 3, les deux ouvertures latérales 20, chacune respectivement décalée par rapport aux logements de réception d'embase 12 mais en regard et au droit d'un orifice traversant 17 correspondant.

Selon la réalisation de la figure 3, on voit que le système de portage 1 comprend une platine intermédiaire de confinement d'embouts 25 qui est rigidement fixée sur la glissière concave profilée 9 par un agencement réglable supérieur 26. Cet agencement réglable supérieur 26 permet le réglage en élévation (Z) de la position de la platine 25.

Cette platine intermédiaire 25 est pourvue d'au moins deux gorges latérales 27 de protection des embouts des cannes 2 / piques 3 par exemple. Chaque gorge latérale 27 est respectivement en regard d'une ouverture 20 de la platine 18, et donc de logements 12 et orifices 17 des autres platines 10 et 15. L'axe de chaque gorge latérale 27 est étendue suivant la direction d'élévation Z, et est respectivement agencée à un flanc transversal 27A (figure 3) de la platine 25. Ces gorges 27 forment chacune un réceptacle arqué débouchant vers l'extérieur du système de portage 1, suivant la direction X.

Sur la figure 3, les gorges 27 latérales sont de profil généralement cylindrique à base circulaire, tout comme des ouvertures 20 à localisation centrales de la platine 18, des orifices 17 de la platine 15 et des logements 12 de la platine 10.

Selon l'invention, les gorges 27, ouvertures 20, orifices 17 et logements 12 sont ici tous étendus en profondeur et transversalement d'un seul côté du tuteur 6 à partir de sa face avant 6A, et étendus transversalement et frontalement suivant les directions X et Y du système 1. En d'autres termes, les gorges 27, ouvertures 20, orifices 17 et logements 12 sont agencées du même côté avant de ce système 1, libérant ainsi la face arrière 30.

On verra plus loin que les diamètres et agencements mutuels des gorges 27, ouvertures 20, orifices 17 et logements 12 sont prédéterminés pour offrir des fonctions de montage rapide des cannes 2 / piques 3 et aussi de serrage de ces cannes 2 / piques 3 solidairement au système 1. En effet, l'invention se sert de mises sous pression et de frictions précalculées, mais aussi de la rigidité relative des piques 3 / cannes 2 pour les bloquer dans leurs positionnements sur le système 1.

Selon la réalisation de la figure 2, le système 1, et plus précisément le tuteur 6, comprend sur la face arrière 30 opposée frontalement à la face avant 6A, des structures de portage sous la forme d'au moins une sangle de portage 29. Cette sangle de portage 29 fait office de structure souple de portage humain et est solidaire d'une part de la semelle de piétement 5 et d'autre part de l'agencement réglable 26 supérieur de la platine 25. Dans des réalisations, la sangle est solidaire de l'agencement médian 19 de la platine 18. La sangle de portage 29 est ainsi rendue solidaire par attachement à la semelle 5 et à l'un des agencements médian 19 ou réglable 26 à cette face arrière 30 du tuteur rigide profilé 6, c'est-à-dire à l'opposée des platines intermédiaires 10, 15, 18 et 25 suivant la direction frontale Y.

Selon les réalisations des figures 1-3, la semelle de piétement 5 comporte à une face inférieure, c'est-à-dire opposée en élévation la face supérieure 11 de la platine 10, au moins trois pieds 31 qui sont saillants vers l'extérieur du système 1, suivant la direction d'élévation Z. Ces pieds 31 permettent, sur un sol ferme notamment, le maintien du système 1 en position relevée (avec le tuteur 6 sensiblement perpendiculaire au sol), ce qui est spécialement pratique, notamment pour le montage/démontage des cannes 2 / piques 3 / boîtiers 40, comme explicité plus loin. Selon les réalisations, le système 1 possède trois ou quatre pieds 31, par exemple. Dans la réalisation de la figure 2, au moins deux pieds 31 comportent des roulettes, par exemple au droit de la face arrière 6A.

Sur la figure 3, la platine intermédiaire d'embase 10 comporte trois logements de réception d'embase 12, agencés selon un triangle dont la base est parallèle à la direction transversale X et dont la pointe - opposée à la base suivant la direction frontale Y - définit un logement de réception 12 central, en avant de la base et opposé au tuteur 6 suivant la direction frontale Y. En d'autres termes, les deux logements 12 de la base sont alignés sur la direction transversale X et le logement 12 central est à l'avant frontalement de ces deux logements 12 de base, face au tuteur 6.

Toujours sur la figure 3, la platine intermédiaire d'enfilement 15 comporte ici trois orifices traversants 17, agencés sur la platine 15 en triangle dont la base est parallèle à la direction transversale X.

On note toutefois que les trois orifices traversants 17 ont un contour externe, ici un diamètre, qui est nettement plus étendu que celui des logements 12. Par exemple, les orifices traversants 17 ont une dimension maximale (e.g. diamètre) de l'ordre de 25-75mm, tandis que les logements 12 ont une dimension maximale (e.g. diamètre) de l'ordre de 10-25mm. Par exemple, la dimension maximale des orifices traversants 17 est au moins double de la dimension maximale des logements 12.

Sur la figure 4, la platine intermédiaire de blocage 18 est en forme de « T » perpendiculairement à la direction d'élévation Z. Cette platine 18 comporte ici au moins quatre ouvertures latérales 20. Deux de ces ouvertures latérales 20 possèdent chacune un dispositif en étau élastiquement déformable 22 et un passage transversal 23 débouchant vers l'extérieur transversalement. Deux autres ouvertures latérales 20, quant à elles centrales, sont alignées suivant la direction frontale Y sur la glissière 9 et au milieu transversalement du tuteur 6. Ces autres ouvertures latérales 20 sont alignées à distance transversalement du tuteur 6, avec une ouverture 20 centrale avant qui est disposée entre les dispositifs en étau 22 et les passages transversaux 23, de sorte que ces dispositifs 22, passages 23 et ouvertures 20 centrales avant, sont alignés les uns avec les autres pour coïncider suivant la direction d'élévation Z.

Sur la figure 4, les dispositifs 22 sont des organes distincts de la platine 18 et rapportés sur celle-ci. Dans cet exemple, chaque dispositif 22 est en forme d'arc ouvert, et est constitué dans une matière élastiquement déformable, telle que PVC, polyuréthane ou autre mousse de polymère. Chaque dispositif 22 est logé et retenu dans un sillon de forme complémentaire, et fixé à la platine 18 par exemple par collage, enserrage ou ancrage mécanique.

Selon une réalisation, chaque dispositif en étau élastiquement déformable 22 comporte un fond 32. Ce fond 32 est en « V » et venu de matière avec la platine 18. Deux pattes 33 en forme de crochets élastiquement déformables saillent chacune vers l'extérieur de la platine 18, l'une en regard de l'autre dans un plan médian 34 frontal et transversal de la platine 18. Par rapport à chaque paire de pattes 33, le passage 23 correspondant présente une dimension suivant la direction frontale Y qui est inférieure à un espacement de passage 35 correspondant entre une extrémité avant et une extrémité arrière du fond en « V ».

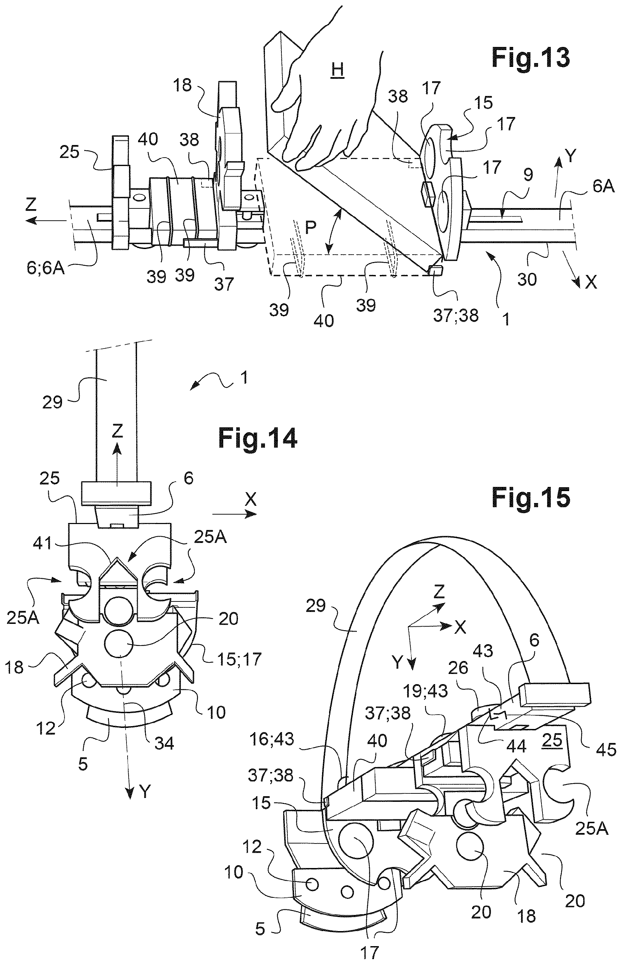

Pour le montage de boîtiers 40, la réalisation de la Figure 13 montre que la platine intermédiaire d'enfilement 15 et/ou la platine intermédiaire de blocage comporte un gabarit 37. Ce gabarit 37 est en forme de « U » dont une base inférieure est rigidement fixée à une face supérieure de la platine intermédiaire (15, 18) correspondante. Chaque gabarit 37 en « U » possède deux branches parallèles 38 qui sont étendues dans un plan frontal suivant la direction d'élévation Z et écartées l'une de l'autre suivant la direction transversale X, d'une distance correspondant à la largeur du boîtier 40 qui lui est destiné afin de le positionner transversalement.

Pour le positionnement frontal de chaque boîtier 40, la face avant 6A du tuteur 6 fait office de butée suivant la direction Y. Ce tuteur rigide profilé 6 comporte à distance l'un de l'autre et du gabarit en « U », au moins deux boucles élastiquement déformables 39, pour l'accrochage sur le système de portage 1 d'un boîtier 40 prismatique formant accessoire de pêche.

Au dessus des boîtiers 40, selon la réalisation de la figure 14, la platine intermédiaire 25 de confinement d'embouts du système de portage 1 est pourvue de trois gorges 27. Deux de ces gorges 27 sont latérales et servent à la protection des embouts des cannes 2. Une autre gorge 27 est centrale, c'est-à-dire alignée sur le plan médian transversal 34 du système 1. Cette gorge 27 centrale sert aussi à la protection d'un embout de canne 2, et est située entre les deux autres gorges 27 latérales. La gorge 27 centrale débouche à une face transversale avant de la platine 25 de confinement. Les deux gorges 27 latérales sont inscrites dans un profil circulaire et la gorge 27 centrale est inscrite dans un profil allongé suivant la direction frontale Y, depuis la face avant de la platine 25. La gorge 27 centrale définit un fond biplan convexe 41 pour la réception d'une embase de pique 3 et est ouverte vers l'avant de la platine 25 ce qui permet l'accès depuis l'avant du système 1.

En se reportant à la figure 14, on comprend que selon les réalisations certains logements 12, orifices 17, ouvertures 20 et gorges 27 coïncident et sont coaxiaux suivant la direction d'élévation Z, tandis que d'autres logements 12, orifices 17, ouvertures 20 et gorges 27 sont décalés les uns par rapport aux autres. Sur cette figure 14, on voit que pour les piques 3, les trois logements 12 coïncident avec un seul orifice 17 central, aucune ouverture 20 et trois gorges 27. Pour les cannes 2, deux orifices 17 latéraux coïncident avec deux ouvertures 20 latérales et deux gorges 27. Ceci rend plus compact les emplacements de montage et fixation de cannes et/ou piques sur le système 1.

En se reportant maintenant à la figure 15, expliquons une réalisation de réglage en position d'élévation des platines 15, 18 et 25. Ici, chacun des agencements réglables inférieur 16, médian 19 et supérieur 26 comporte un corps de support 42 (figure 3) qui soutient la platine correspondante.

Chaque agencement (16, 19, 26) de la figure 15 possède en outre un montage 43 à came et molette dont la came 44 est en prise coulissante par défaut, avec la glissière 9 et dont la molette 45 assure par vissage, le plaquage en pression et l'immobilisation du montage 43 par rapport à la glissière 9, dans une position de blocage souhaitée le long de la glissière 9. De fait, cette position peut être choisie et ajustée entre les extrémités d'élévation d'embase 7 et sommitale 8.

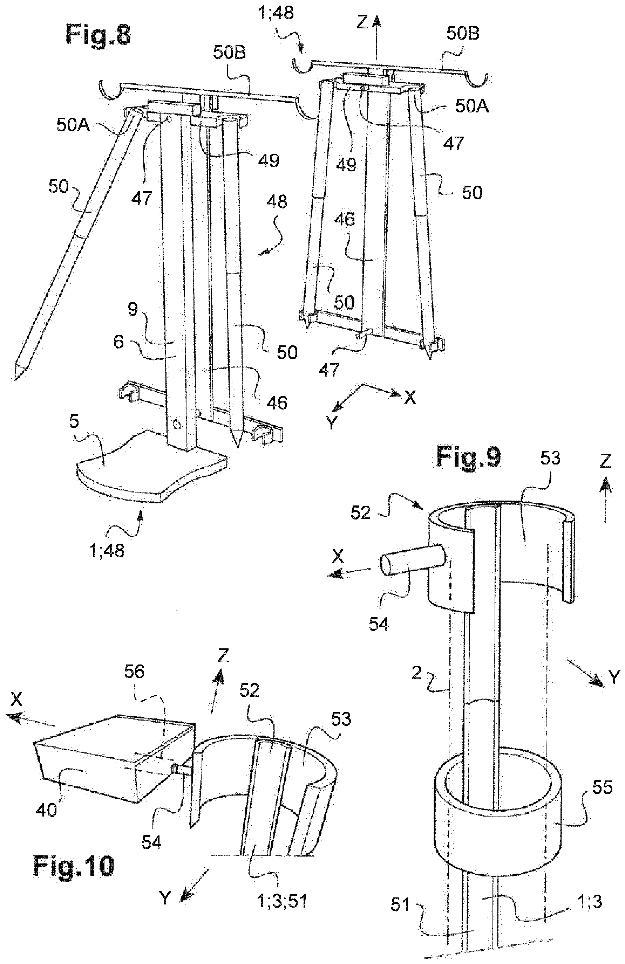

En se reportant maintenant à la figure 8, selon une réalisation, le système 1 comporte des structures de fixation rigide et amovible 47. Ces structures 47 servent à assembler sur la face arrière 30 du tuteur 6, un cadre de maintien au sol 48.

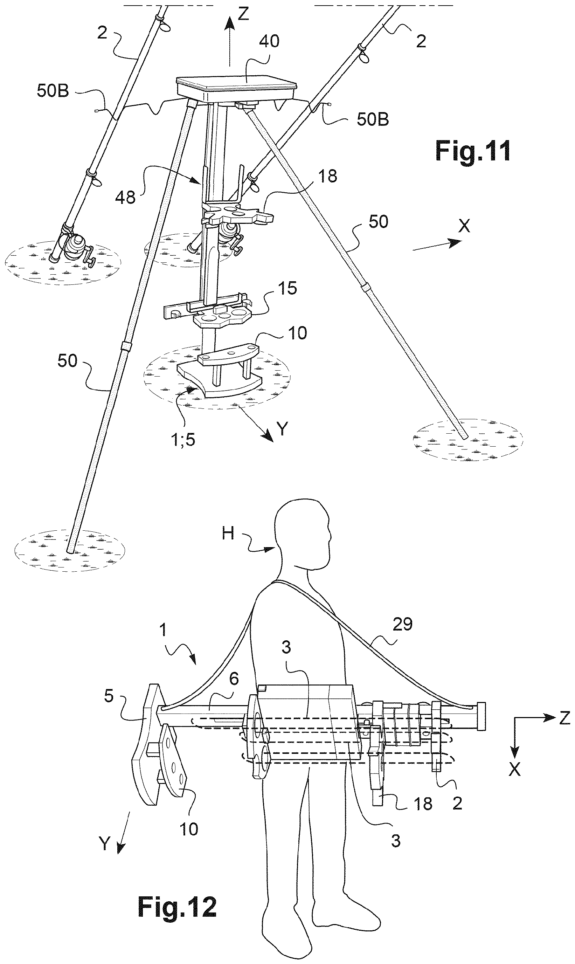

La partie de droite de la figure 8 montre ce cadre 48 séparé du reste du système 1. Ce cadre 48 assure le maintien au sol de cannes comme montré sur la figure 11, lorsqu'il est séparé du reste du système 1. Par contre, le cadre 48 peut être intégré - cf. partie de gauche de la figure 8 - notamment pour le transport, sur la face arrière 30 du tuteur rigide profilé 6.

Sur la figure 8, ce cadre de maintien au sol 48 comporte au moins :
- une colonne d'élévation centrale 46,
- un bras transversal 49 sensiblement au niveau de l'extrémité d'élévation sommitale 8 et au sommet de la colonne 46,
- deux béquilles 50 qui sont déplaçables et extensibles, ces béquilles déplaçables et extensibles 50 étant montées sur des rotules 50A, à des extrémités latérales du bras transversal 49, et
- deux tringles 50B à encoches creuses, rigidement montées à une extrémité haute et de part et d'autre transversalement, de la colonne d'élévation centrale 46.

La figure 8 montre bien ce cadre 48 de maintien au sol du système 1 selon l'invention, avec ses tringles 50B où les encoches creuses permettent de recevoir en appui des cannes 2, d'autre part latéralement de la colonne d'élévation centrale 46. A gauche, cette colonne 46 est attachée au tuteur 6 et les béquilles déplaçables 50 sont montrées l'une (à gauche) en position de mise en fonction c'est-à-dire en cours d'inclinaison transversale et frontale, tandis que l'autre (à droite) en position encore rabattue contre la colonne 46 et donc dirigée en élévation (Z).

A droite sur la figure 8, le cadre 48 est montré seul et donc détaché du reste du système 1. Ses deux béquilles 50 sont rétractées et rabattues en élévation (Z) contre la colonne 46.

Pour illustrer un exemple d'utilisation pratique de ce cadre 48, la figure 11 est une vue en perspective au sol d'un système 1 selon l'invention, avec son cadre 48 maintenant au sol deux cannes 2 grâce à ses deux béquilles 50 étendues vers l'avant et transversalement pour stabiliser ces deux cannes 2 chacune en appui sur une encoche creuse de la tringle 50B en saillie transversalement, tandis que l'embase des deux cannes 2 repose au sol derrière le système 1. Il est également divulgué une pique 3 telle que montrée sur la figure 9, qui est agencée pour être montée sur le système de portage 1. Cette pique 3 de la figure 9 comporte classiquement une tige 51 avec une extrémité supérieure 52. A cette extrémité 52, la tige 3 possède un collier 53 définissant une goulette ouverte pour l'engagement de la canne 2. De plus, à distance vers le bas en élévation (Z), la pique 3 comporte une goulette close 55, dans laquelle la canne 2 doit être enfilée de haut en bas, pour être maintenue sur cette pique 3.

Comme le montre la figure 9, cette pique 3 permet à une canne 2 (en pointillés) d'être logée dans le collier 53 puis dans la goulette close 55. Selon cette réalisation, le collier 53 est en fer à cheval, ouvert à l'opposé de la tige 51 suivant la direction frontale Y et pourvu, en périphérie extérieure et suivant la direction transversale X, d'un doigt cylindrique 54 en saillie diagonalement au collier 53.

Ce collier 53 est généralement circulaire est fixé à une extrémité en élévation dite haute, de la tige 51. Il en va de même pour la goulette close 55. En regard de la tige 51 le collier 53 présente à l'avant un espace de passage de la canne 2 à l'intérieur de ce collier 53, pour son montage.

Comme le montre la figure 10, grâce au doigt 54, un boîtier 40 peut être accroché sur la pique 3 dans une position pratique où le contenu de ce boîtier 40 est facilement accessible. A cette fin, le doigt 54 est agencé en saillie transversalement du collier 53. La forme de ce doigt 54 est cylindrique et complémentaire à celle d'un guidage complémentaire 56 à l'intérieur du boîtier 40. Ce boîtier 40 peut ainsi être accroché sur la pique, à hauteur pratique pour l'utilisateur humain H, qui peut ainsi avoir ses accessoires de pêche à disposition, en haut de la pique 3 et dans ce boîtier 40. Evidemment, une telle pique 3 à doigt 54 de fixation de boîtier 40 peut être intégrée au système de portage 1, notamment pour le portage et transport.

Maintenant, en se référant aux figures 5-7 notamment, un procédé d'accrochage P selon l'invention est exposé. Ce procédé P permet de monter sur un système de portage 1 tel qu'évoqué, au moins une canne à pêche 2 et/ou au moins une pique de « surfcasting » 3. Ce procédé P comporte également le montage d'un boîtier 40 au sein d'un système 1, tel qu'illustré à la figure 13.

Selon ce procédé P, la canne 2 ou pique 3 est glissée par l'utilisateur humain H, à travers l'un des orifices 17 de la platine intermédiaire d'enfilement 15, comme représenté par la flèche de haut en bas sur la figure 5. Cette étape de glissement est opérée suivant un angle d'approche A. Par rapport à la direction d'élévation Z, cet angle d'approche A est incliné de bas en haut, d'une part vers l'extérieur transversalement, et d'autre part vers l'avant frontalement.

Puis, selon une étape ultérieure du procédé P, une embase inférieure de la canne 2 est reçue dans l'un des logements 20 correspondant de la platine intermédiaire d'embase 18, comme montré par la flèche sur la figure 6. En fait, la canne 2 est placée avec son corps contre le passage 23 du dispositif 22, mais sans y pénétrer à cette étape de réception.

Ensuite, à une étape de logement et fixation illustrée par la flèche (de droite à gauche) sur la figure 7, le procédé P prévoit que la canne 2 est totalement redressée parallèlement à la direction d'élévation Z, pour être logée en forçant le passage 23 et en pénétrant dans l'étau souple correspondant du dispositif 22 de la platine intermédiaire de blocage 18.

Alors, sur la figure 7, cette canne 2 est reçue dans l'une des ouvertures 20 latérales de cette platine 18. De plus, une extrémité supérieure de cette canne 2 est logée dans l'une des gorges 25A ou 27 correspondante de la platine 25, pour finaliser l'ancrage de la canne 2 au sein du système 1. Ainsi, l'extrémité ou embout de cette canne 2 est protégé par la gorge latérale 27 ou 25A de la platine intermédiaire de confinement d'embouts 25.

En position finale, on voit bien sur la figure 7 que les moulinets des cannes 2 reposent sur les plages 24 de la platine 18, ce qui assure leur calage en élévation. Comme montré à la figure 12, le système 1 maintient groupées et protège les cannes 2, piques 3 et boîtiers 40 de façon stable et ferme ce qui en autorise la manipulation et le transport par un utilisateur H.

Grâce à ce procédé P dit « quart de tour » on loge ou déloge une canne 2 en moins de cinq secondes par sa fixation par clippage dans le dispositif 22 et par friction au sein des gorges 25A. Similairement, une pique 3 est positionnée sur le système 1 dans le même laps de temps.

L'invention est avantageuse et utile pour la pêche de loisir. Le système 1 et son procédé P forment un combiné d'une simplicité déconcertante, en offrant des fonctionnalités utiles de rigidité, d'encombrement, de capacité importante de portage et de modularité.

L'invention est utile et avantageuse pour le transport du matériel de pêche, car le système 1 est non seulement modulaire, mais permet aussi le maintien des cannes en position d'emploi ainsi que la mise à disposition d'accessoires.

De par son ossature rigide (semelle 5, tuteur 6 et platines 15/18/25 notamment) l'invention rend possible de tenir verticalement tout un équipement de pêche (cannes/piques/accessoires) lorsqu'on pose le système 1, contrairement à une housse souple qui impose de la coucher sur le sol, après avoir sorti la canne 2 et qui devient dès lors d'aucune utilité.

L'invention permet aussi de transporter facilement un équipement de façon confortable, e.g. de deux cannes 2 télescopiques ou plus en fonction du modèle, ainsi que leurs 2 ou 3 piques de surfcasting et deux boîtiers 40, par exemple.

L'invention permet d'obtenir un ensemble (système 1 et équipement) « tout en un », léger et peu encombrant, qui peut porter jusqu'à quatre piques de surfcasting par exemple.

L'invention a été par exemple conçue pour qu'une boîte d'accessoires ainsi que deux boîtes d'appâts puissent venir s'accoupler sur son armature, lui conférant une praticité de portage fort utile.

Lorsque l'invention est en position de pêche, la boîte d'accessoires vient se placer sur le haut du tuteur 5, pour être utilisée à hauteur normale (e.g. 900mm) offrant un confort de pêche et une simplicité d'usage inédits, et peut être positionnée toujours face aux flots. L'invention est utilisable en bord de mer/lac/quai/rivière.

La fixation du style « Tenon et Mortaise » est appliqué pour que les piques et les boîtes puissent venir s'arrimer entre elles, apportant ainsi une proximité d'une efficacité utile pour mettre ou remettre un appât sur l'hameçon, évitant tout déplacement intempestif du pêcheur pour « réarmer » sa canne.

L'invention peut recevoir un accessoire constitué de deux béquilles télescopiques 50 pour sa stabilité au sol et de deux tringles en forme de bras mobiles, dans le but d'appuyer deux cannes et pouvoir pêcher « mains libres » sur un terrain dur.

L'invention a l'avantage, lors de sa manipulation de ne pas abîmer les cannes 2 ainsi que leurs moulinets et de permettre le transport de piques 3. L'invention protège en toute sécurité le pêcheur et autrui des pointes des piques. L'invention offre une sécurité inédite et grâce à sa simplicité est peu coûteuse à fabriquer.

Sa fabrication peut être réalisée en série, e.g. par une machine et donc avec peu de main d'oeuvre onéreuse. Selon les besoins, l'invention peut être fabriqué en métal, en bois ou en matière plastique (par exemple : découpage « water jet » de matières synthétiques / pliage et usinage de métaux / clivage pour pièces de menuiserie en bois ou analogues / moulage - injection de plasturgie).

L'invention pèse dans une réalisation environ 880 grammes à vide et entre 2Kg et 4Kg avec les accessoires en fonction de leurs poids propre.

L'invention simplifie le transport et est pratique. L'invention se porte facilement à l'épaule comme un fusil, ou à bout de main comme une valise ou encore à la manière d'un sac de sport ou de golf. L'invention peut être renversée en toute sécurité, sans qu'aucun équipement ne se décroche du système 1.

Des structures souples de portage humain (e.g. la sangle 29) sont accrochées au système 1 pour le transport groupé des cannes/piques/accessoires.

L'invention offre un support réglable à pied vertical pour plusieurs cannes (et/ou piques de « surfcasting ») montées de manière réglable. L'équipement peut être maintenu verticalement entre deux platines coulissantes et blocables.

En effet, pour l'ensemble des cannes et/ou piques et/ou boîtes, plusieurs platines sont réglables le long du tuteur 6 vertical par coulissement et blocables par clippage, le long d'une glissière 9 formant rail de réception parallèle au tuteur 6 vertical.

L'invention offre permet notamment trois fonctions:
1- rigidité.
2- centralisation des masses.
3- réduction des points suspendus.

En outre l'invention permet d'embarquer au moins une boîte d'accessoires spécifiques ainsi que d'autres boîtes par exemple pour les appâts en plus des cannes et piques.

Dans les exemples présentés, l'invention comporte:
1- un système 1 ayant à sa base, une semelle 5 formant socle horizontal sur lequel est fixé un tuteur 6 vertical pour former un ensemble rigide.
2- sur le tuteur 6 viennent se placer au moins deux platines mobiles dans une glissière 9 pour le réglage en fonction de la dimension des cannes. Typiquement, une platine fixe accueille les piques de surfcasting 3.
3- sur les deux platines des dispositifs d'agrafage élastique (i.e. « clips ») sont montés pour que les cannes et les piques soient ainsi immobilisés.
4- si le pêcheur H utilise des cannes non télescopiques (ou « mono corps »), l'invention est convertible et peut porter quatre piques 3.
5- au moins un ensemble détachable, e.g. en forme de pique, est apte à être planté dans un sol meuble et à servir de support pour des cannes de pêche ou analogues. Cet ensemble détachable comporte une platine de maintien d'un boîtier ou coffret d'accessoires.
6- une paire de béquilles, pouvant être assemblées au système 1 de transport, possède des tiges déplaçables de trépied, pour le maintien de cannes ou analogues.

Naturellement, l'invention est sujette à des variantes. Bien que plusieurs modes de réalisation aient été décrits, on comprend que toutes ces variantes ne peuvent être décrites et illustrées ici de manière exhaustive. Il est bien sûr envisageable de remplacer un moyen/une étape décrit par un équivalent, sans sortir du cadre de l'invention défini par les revendications annexes. La liste des références aux figures suit :

| REFERENCE | DESIGNATION |
|---|---|
| 1 | système de portage |
| 2 | canne à pêche |
| 3 | pique de surfcasting |
| 4 | accessoire de pêche |
| 5 | semelle de piétement |
| 6 | tuteur rigide profilé / face avant 6A |
| 7 | extrémité d'élévation d'embase |
| 8 | extrémité d'élévation sommitale |
| 9 | glissière concave profilée |
| 10 | platine intermédiaire d'embase |
| 11 | face supérieure / semelle de piétement |
| 12 | logements de réception d'embase |
| 13 | localisation prédéterminée transversale |
| 14 | localisation prédéterminée frontale |
| 15 | platine intermédiaire d'enfilement |
| 16 | agencement réglable inférieur |
| 17 | orifices traversants |
| 18 | platine intermédiaire de blocage |
| 19 | agencement réglable médian |
| 20 | ouvertures latérales |
| 21 | partie d'extrémité |
| 22 | dispositif en étau |
| 23 | passage transversal débouchant |
| 24 | plages d'appui supérieures |
| 25 | platine intermédiaire de confinement |
| 25A | Gorge latérale |
| 26 | agencement réglable supérieur |
| 27 | gorge latérale / 27A : flanc transversal |
| 28 | réceptacle arqué débouchant |
| 29 | sangle de portage |
| 30 | face arrière / tuteur rigide profilé |
| 31 | pieds saillants |
| 32 | fond en « V » |
| 33 | pattes en crochets |
| 34 | plan médian transversal |
| 35 | espacement de passage |
| 36 | face transversale avant |
| 37 | gabarit en « U » |
| 38 | branches parallèles |
| 39 | boucles d'accrochage |
| 40 | boîtier prismatique formant accessoire |
| 41 | fond biplan convexe |
| 42 | corps de support |
| 43 | montage à came et molette |
| 44 | came |
| 45 | molette |
| 46 | colonne d'élévation centrale |
| 47 | structures de fixation rigide et amovible |
| 48 | cadre de maintien au sol |
| 49 | bras transversal |
| 50 | béquilles déplaçables et extensibles |
| 50A | rotules articulation cadre / béquilles |
| 50B | tringles à encoches creuses |
| 51 | tige |
| 52 | extrémité supérieure de tige |
| 53 | collier ou goulette ouverte |
| 54 | doigt cylindrique en saillie |
| 55 | goulette close |
| 56 | guidage de forme complémentaire |
| X | direction transversale |
| Y | direction frontale |
| Z | direction d'élévation |
| A | angle d'approche |
| P | procédé d'accrochage |
| A | angle d'approche |
| H | utilisateur humain / pêcheur |

## Revendications

1. Système de portage (1) pour accessoires de pêche, ce système de portage (1) comportant au moins: un tuteur (6) rigide profilé, une semelle (5) de piétement et une pluralité de platines intermédiaires (10, 15, 18, 25); le tuteur (6) étant étendu suivant une direction d'élévation (Z) du système (1) et comportant une extrémité d'élévation d'embase (7) et une extrémité d'élévation sommitale (8); le tuteur (6) comprenant une glissière (9) entre les extrémités (7, 8) d'embase et sommitale; la semelle (5) étant étendue perpendiculairement à la direction d'élévation (Z) depuis l'extrémité d'élévation d'embase (7) et étant rigidement fixée au tuteur (6); au moins trois platines intermédiaires (15, 18, 25) étant étendues perpendiculairement à la direction d'élévation (Z) ; le système (1) comprenant au moins:
- une platine intermédiaire d'embase (10) qui est rigidement fixée sur une face supérieure (11) de la semelle (5), cette face supérieure (11) comprenant au moins deux logements (12) de réception, chaque logement de réception (12) étant à une localisation prédéterminée suivant la direction frontale (Y) et une direction transversale (X) du système (1); lesdits au moins deux logements (12) étant agencés l'une de part et l'autre d'autre part de la glissière (9) suivant la direction transversale (X),
- une platine intermédiaire d'enfilement (15) qui est rigidement fixée sur la glissière (9) par un agencement réglable inférieur (16) de réglage en élévation; cette platine (15) étant pourvue d'au moins deux orifices traversants (17), dont au moins un est au droit d'un logement (12) correspondant, ledit système de portage étant tel que la semelle (5) de piétement et les platines intermédiaires sont toutes étendues depuis une même face avant (6A) du tuteur (6), suivant une direction frontale (Y) du système (1) ; la glissière (9) du tuteur (6) étant concave et profilée entre les extrémités (7, 8) d'embase et sommitale; les platines intermédiaires (15, 18, 25) étant étendues perpendiculairement à la direction d'élévation (Z) de manière réglable suivant la direction d'élévation, entre la semelle (5) et l'extrémité sommitale (8) et la platine intermédiaire d'enfilement (15) est rigidement fixée sur la glissière (9) concave profilée par un agencement réglable inférieur (16) de réglage en élévation, le système de portage (1) comportant en outre :
- une platine intermédiaire de blocage (18) qui est rigidement fixée sur la glissière (9) par un agencement réglable médian (19) de réglage en élévation; cette platine (18) étant pourvue d'au moins deux ouvertures (20) latérales chacune respectivement au dessus et décalée frontalement et transversalement d'un logement (12) et en regard d'un orifice traversant (17) correspondant; chaque ouverture (20) latérale étant d'axe étendu suivant la direction d'élévation (Z), et présentant un dispositif (22) en étau élastiquement déformable à passage (23) transversal débouchant vers l'extérieur de la platine (18) suivant la direction transversale (X); la platine intermédiaire de blocage (18) possédant au moins deux plages d'appui supérieures (24), chacune (24) dans la périphérie d'une ouverture (20) latérale.

2. Système de portage (1) selon la revendication 1,
**caractérisé en ce que** ce système de portage (1) comprend une platine intermédiaire de confinement d'embouts (25) qui est rigidement fixée sur la glissière (9) par un agencement réglable supérieur (26) de réglage en élévation; cette platine (25) étant pourvue d'au moins deux gorges latérales (25A ; 27) de protection d'embout ; au moins une gorge (25A ; 27) est en regard d'une ouverture (20) latérale et d'un orifice transversale (17) et présentant un axe étendu suivant la direction d'élévation (Z), au moins une gorge (25A ; 27) étant agencée à un flanc transversal de la platine (25) et formant un réceptacle arqué débouchant vers l'extérieur du système (1), suivant la direction transversale (X).

3. Système de portage (1) selon la revendication 1,
**caractérisé en ce que** le tuteur (6) rigide profilé comprend au moins une sangle de portage (29) solidaire du tuteur (6) d'une part au droit de la semelle (5) et d'autre part d'une platine de blocage (18) ou de confinement (25); cette sangle (29) étant rendue solidaire par attachement à une face arrière (30) du tuteur (6), opposée aux platines intermédiaires (15, 18, 25) suivant la direction frontale (Y).

4. Système de portage (1) selon la revendication 1,
**caractérisé en ce que** la semelle (5) comporte à une face inférieure, au moins trois pieds (31) saillants vers l'extérieur du système (1), suivant au moins une des directions d'élévation (Z) et frontale (Y).

5. Système de portage (1) selon la revendication 1,
**caractérisé en ce que** la platine intermédiaire d'embase (10) comporte trois logements (12), agencés en triangle dont la base est parallèle à la direction transversale (X) et dont la pointe opposée à la base suivant la direction frontale (Y) définit un logement (12) central, en avant de la base et opposé au tuteur (6) suivant cette direction frontale (Y).

6. Système de portage (1) selon la revendication 1,
**caractérisé en ce que** la platine intermédiaire d'enfilement (15) comporte trois orifices (17) traversants dont au moins un est en regard d'un logement de réception d'embase (12) de la platine intermédiaire d'embase (10), ces trois orifices (17) étant agencés selon un triangle dont la base est parallèle à la direction transversale (X).

7. Système de portage (1) selon la revendication 1,
**caractérisé en ce que** la platine intermédiaire de blocage (18) est en forme de « T » perpendiculairement à la direction d'élévation (Z) et comporte au moins quatre ouvertures (20) latérales, dont deux ouvertures (20) latérales à dispositif (22) et passage (23), ainsi que deux ouvertures (20) centrales alignées suivant la direction frontale (Y).

8. Système de portage (1) selon la revendication 1,
**caractérisé en ce que** chaque dispositif en étau élastiquement déformable (22) à passage (23) de la platine intermédiaire de blocage (18) comporte un fond en « V » venu de matière avec cette platine (18) et deux pattes (33) en crochets élastiquement déformables, l'une (33) en regard de l'autre (33) dans un plan (34) médian frontal et transversal de la platine (18), avec le passage (23) dont la dimension suivant la direction frontale (Y) est inférieure à un espacement de passage (35) correspondant entre une extrémité avant et une extrémité arrière du fond en « V ».

9. Système de portage (1) selon la revendication 8,
**caractérisé en ce que** la platine intermédiaire de blocage (18) est en forme de « T » perpendiculairement à la direction d'élévation (Z) et comporte au moins deux ouvertures (20) avant en « V », de part et d'autre transversalement du tuteur (6) et débouchant à une face transversale avant (36) de cette platine (18).

10. Système de portage (1) selon la revendication 1,
**caractérisé en ce qu'**au moins une platine intermédiaire d'enfilement (15) et une platine intermédiaire de blocage (18) comporte un gabarit (37) en « U » dont une base inférieure et rigide est fixée à une face supérieure de la platine (15, 18) correspondante et dont deux branches parallèles (38) sont étendues suivant la direction d'élévation (Z) et écartées l'une de l'autre suivant la direction transversale (X), tandis que le tuteur (6) comporte au moins deux boucles d'accrochage (39) élastiquement déformables à distance l'une de l'autre et du gabarit en « U », ces boucles (39) étant agencées pour l'accrochage sur le système de portage (1) d'un boîtier (40).

11. Système de portage (1) selon la revendication 1,
**caractérisé en ce que** ce système de portage (1) comprend une platine intermédiaire de confinement (25) pourvue de deux gorges (25A ; 27) latérales et d'une gorge (25A ; 27) centrale qui est située entre les deux gorges (25A ; 27) latérales et qui débouchent à une face transversale avant de cette platine (25), les deux gorges latérales (25A ; 27) étant inscrites dans un profil circulaire et la gorge (25A ; 27) centrale étant inscrite dans un profil allongé suivant la direction frontale (Y) depuis la face avant de la platine (25) et définissant un fond biplan convexe vers l'avant de cette gorge (25A ; 27) centrale.

12. Système de portage (1) selon la revendication 1,
**caractérisé en ce qu'**au moins l'un des agencements réglables inférieur (16), médian (19) et un agencement réglable supérieur (26) d'une platine intermédiaire de protection d'embout (25) comporte un corps de support de la platine (15, 18, 25) correspondante, et un montage (43) à came (44) et molette (45) dont la came est en prise coulissante par défaut avec la glissière (9) concave profilée et dont la molette assure par vissage le plaquage en pression et l'immobilisation du montage (43) de la platine (15, 18, 25) correspondante, par rapport à la glissière (9), en une position de blocage suivant la direction d'élévation (Z), entre les extrémités d'élévation d'embase (7) et sommitale (8).

13. Système de portage (1) selon la revendication 1,
**caractérisé en ce que** ce système de portage (1) comporte des structures de fixation (47) rigides et amovibles d'un cadre (48) de maintien au sol sur une face arrière (30) du tuteur (6), ce cadre (48) comportant au moins :
- une colonne (46) d'élévation centrale,
- un bras (49) transversal sensiblement au niveau de l'extrémité d'élévation sommitale au sommet de la colonne (46),
- deux béquilles (50) déplaçables et extensibles, montées sur rotules (50A) à des extrémités latérales du bras transversal, et,
- deux tringles (50B) à encoches creuses, rigidement montées à une extrémité haute et de part et d'autre transversalement, de la colonne (46).

14. Système de portage (1) selon l'une des revendications 1 à 13, **caractérisée en ce que** le système de portage (1) comporte une pique (3) de portage de canne à pêche (2) pour la pêche de loisirs,
la pique (3) présentant à une extrémité supérieure (52) de sa tige (51), un collier (53) en fer à cheval, ouvert à l'opposé de la tige (51) suivant la direction frontale (Y) et pourvu d'un doigt cylindrique (54) en périphérie extérieure et en saillie suivant la direction transversale (X); la pique (3) présente à un emplacement médian en élévation de sa tige (51), un collier circulaire définissant une goulette close (55) qui est en regard avec un espace de passage de pique à l'intérieur du collier (53); le doigt (54) étant complémentaire à un guidage complémentaire (56) d'un boîtier (40) formant accessoire de pêche ; la pique (3) et ce boîtier (40) pouvant être intégrés au système de portage (1).

15. Procédé (P) d'accrochage sur un système de portage (1) selon l'une des revendications 1 à 13, pour l'accrochage d'au moins l'un parmi : une canne à pêche (2) et une pique de maintien (3), **caractérisé en ce que** selon ce procédé (P), la canne (2) ou la pique (3) est glissée suivant un angle d'approche (A) à travers l'un des orifices traversants (17) de la platine intermédiaire d'enfilement (15), puis une embase inférieure de cette canne (2) ou pique (3) est reçue dans l'une des ouvertures (20) de la platine intermédiaire de blocage (18), suite à quoi la canne (2) ou la pique (23) est redressée parallèlement à la direction d'élévation (Z) pour être logée à travers le passage (23) puis immobilisée par l'un des dispositif (22) correspondant de la platine intermédiaire de blocage (18), tandis qu'une extrémité supérieure de cette canne (2) ou de la pique (3) est reçue dans une des gorges (25A ; 27) correspondante de la platine (25) intermédiaire de confinement d'embouts.

## Patentansprüche

1. Tragesystem (1) für ein Angelzubehör, wobei dieses Tragesystem mindestens aufweist: eine starre, profilierte Stange (6), ein Bodengestell (5) und eine Mehrzahl von Zwischenplatten (10, 15, 18, 25), wobei die Stange (6) sich in Höhenrichtung (Z) des Systems (1) erstreckt und in Höhenrichtung ein Sockelende (7) und ein oberes Ende (8) aufweist, wobei die Stange (6) eine Gleitschiene (9) zwischen dem Sockelende und dem oberen Ende (7, 8) aufweist, wobei das Bodengestell (5) sich senkrecht zu der Höhenrichtung (Z) ab dem Sockelende (7) erstreckt und starr an der Stange (6) befestigt ist, wobei mindestens drei Zwischenplatten (15, 18, 25) sich senkrecht zu der Höhenrichtung (Z) erstrecken, wobei das System (1) mindestens aufweist:
- eine Sockel-Zwischenplatte (10), die starr auf einer oberen Fläche (11) des Bodengestells (5) befestigt ist, wobei diese obere Fläche (11) mindestens zwei Aufnahmelager (12) aufweist, wobei jedes Aufnahmelager (12) sich an einem vorbestimmten Ort in der Vorwärtsrichtung (Y) und einer Querrichtung (X) des Systems (1) befindet, wobei die mindestens zwei Aufnahmelager (12) zu beiden Seiten der Gleitschiene (9) in Querrichtung (X) angeordnet sind,
- eine Einführ-Zwischenplatte (15), die starr auf der Gleitschiene (9) über eine untere einstellbare Anordnung (16) zur Höheneinstellung befestigt ist, wobei die Platte (15) mit mindestens zwei Durchgangsöffnungen (17) versehen ist, von denen sich mindestens eine direkt über einem entsprechenden Aufnahmelager (12) befindet, wobei das Tragesystem derart ausgebildet ist, dass das Bodengestell (5) und die Zwischenplatten sich alle von einer gleichen Vorderseite (6A) der Stange (6) aus in eine Vorwärtsrichtung (Y) des Systems (1) erstrecken, wobei die Gleitschiene (9) der Stange (6) zwischen dem Sockelende und dem oberen Ende (7, 8) konkav und profiliert geformt ist, wobei die Zwischenplatten (15, 18, 25) sich senkrecht zu der Höhenrichtung (Z) in Höhenrichtung einstellbar zwischen dem Bodengestell (5) und dem oberen Ende (8) erstrecken und wobei die Einführ-Zwischenplatte (15) starr an der konkaven, profilierten Gleitschiene (9) über eine einstellbare untere Anordnung (16) zur Höheneinstellung befestigt ist, wobei das Tragesystem (1) ferner aufweist:
- eine Blockier-Zwischenplatte (18), die starr an der Gleitschiene (9) über eine einstellbare mittlere Anordnung (19) zur Höheneinstellung befestigt ist, wobei diese Platte (18) mit mindestens zwei seitlichen Öffnungen (20) versehen ist, die jeweils oberhalb und in Vorwärtsrichtung und in Querrichtung eines Aufnahmelagers (12) und gegenüber einer entsprechenden Durchgangsöffnung (17) angeordnet sind, wobei jede seitliche Öffnung (20) eine Achse in Höhenrichtung (Z) aufweist und eine elastisch verformbare Klemmvorrichtung (22) aufweist mit einem quer verlaufenden Durchgang (23), der außerhalb der Platte (18) entlang der Querrichtung (X) mündet, wobei die Blockier-Zwischenplatte (18) mindestens zwei obere Auflageflächen (24) aufweist, von denen jede (24) am Rand einer seitlichen Öffnung (20) liegt.

2. Tragesystem (1) nach Anspruch 1,
**dadurch gekennzeichnet, dass** das Tragesystem (1) eine Zwischenplatte (25) zur Aufnahme von Ansatzstücken aufweist, welche starr an der Gleitschiene (9) durch eine obere einstellbare Anordnung (26) zum Einstellen in Höhenrichtung befestigt ist, wobei diese Platte (25) mit mindestens zwei seitlichen Einschnürungen (25A, 27) zum Schutz des Ansatzstücks versehen ist, wobei mindestens eine Einschnürung (25A, 27) gegenüber einer seitlichen Öffnung (20) und einer Queröffnung (17) liegt und eine sich in Höhenrichtung erstreckende Achse (Z) aufweist, wobei mindestens eine Einschnürung (25A, 27) an einer Querflanke der Platte (25) angeordnet ist, und eine gebogene Aufnahme bildet, die sich zum Äußeren des Systems (1) in der Querrichtung (X) öffnet.

3. Tragesystem (1) nach Anspruch 1,
**dadurch gekennzeichnet, dass** die starre, profilierte Stange (6) mindestens einen Tragegurt (29) aufweist, der fest mit der Stange (6), einerseits an dem Bodengestell (5) und andererseits an einer Blockierplatte (18) oder einer Aufnahmeplatte (25), verbunden ist, wobei dieser Tragegurt (29) verbunden wird durch eine Befestigung an einer Hinterseite (30) der Stange (6) gegenüber den Zwischenplatten (15, 18, 25) entlang der Vorwärtsrichtung (Y).

4. Tragesystem (1) nach Anspruch 1,
**dadurch gekennzeichnet, dass** das Bodengestell (5) an einer Unterseite mindestens drei Füße (31) aufweist, die zum Äußeren des Systems (1) entlang der Höhenrichtung (Z) und/oder der Vorwärtsrichtung (Y) vorstehen.

5. Tragesystem (1) nach Anspruch 1,
**dadurch gekennzeichnet, dass** die Sockel-Zwischenplatte (10) drei Aufnahmen (12) aufweist, die in einem Dreieck angeordnet sind, dessen Basis parallel zu der Querrichtung (X) verläuft und dessen Spitze gegenüber der Basis in Vorwärtsrichtung (Y) eine zentrale Aufnahme (12) definiert, vor der Basis und gegenüber der Stange (6) in dieser Vorwärtsrichtung (Y).

6. Tragesystem (1) nach Anspruch 1,
**dadurch gekennzeichnet, dass** die Einfüge-Zwischenplatte (15) drei Durchgangsöffnungen (17) aufweist, von denen mindestens eine gegenüber einem Sockelaufnahmelager (12) der Sockel-Zwischenplatte (10) liegt, wobei die drei Öffnungen (17) in einem Dreieck angeordnet sind, dessen Basis parallel zu der Querrichtung (X) verläuft.

7. Tragesystem (1) nach Anspruch 1,
**dadurch gekennzeichnet, dass** die Blockier-Zwischenplatte (18) senkrecht zu der Höhenrichtung (Z) "T"-förmig ist und mindestens vier seitliche Öffnungen (20) aufweist, zwei seitliche Öffnungen (20) mit einer Vorrichtung (22) und einem Durchgang (23) sowie zwei zentrale Öffnungen (20), die entlang derZwis Vorwärtsrichtung (Y) ausgerichtet sind.

8. Tragesystem (1) nach Anspruch 1,
**dadurch gekennzeichnet, dass** jede elastisch verformbare Klemmvorrichtung (22) mit einem Durchgang (23) der Blockier-Zwischenplatte (18) einen "V"-förmigen Boden aus dem Material der Platte (18) aufweist und zwei elastisch verformbare hakenförmige Laschen (33), die sich in einer vorderen und quer verlaufenden Mittelebene (34) der Platte (18) gegenüberliegen, mit dem Durchgang (23), dessen Abmessung in Vorwärtsrichtung (Y) kleiner ist als ein entsprechender Durchgangsabstand (35) zwischen einem vorderen Ende und einem hinteren Ende des "V"-förmigen Bodens.

9. Tragesystem (1) nach Anspruch 8,
**dadurch gekennzeichnet, dass** die Blockier-Zwischenplatte (18) senkrecht zu der Höhenrichtung (Z) "T"-förmig ist und mindestens zwei vordere "V"-förmige Öffnungen in Querrichtung zu beiden Seiten der Stange (6) aufweist, die in einer vorderen Querseite (36) dieser Platte (18) münden.

10. Tragesystem (1) nach Anspruch 1,
**dadurch gekennzeichnet, dass** mindestens eine Einführ-Zwischenplatte (15) und eine Blockier-Zwischenplatte (18) eine Form (37) eines "Us" aufweisen, dessen untere starre Basis an einer entsprechenden oberen Platte (18) befestigt ist und dessen beide parallelen Arme (38) sich in Höhenrichtung (Z) erstrecken und voneinander in der Querrichtung (X) beabstandet sind, während die Stange (6) mindestens zwei elastisch verformbare Aufhängeschienen (39) aufweist, die voneinander beabstandet sind und die Form eines "Us" aufweisen, wobei diese Schienen (39) angeordnet sind für das Aufhängen eines Kastens (40) an dem Tragesystem (1).

11. Tragesystem (1) nach Anspruch 1,
**dadurch gekennzeichnet, dass** das Tragesystem (1) eine Aufnahme-Zwischenplatte (25) aufweist, die mit zwei seitlichen Einschnürungen (25A, 27) und einer mittleren Einschnürung (25A, 27) versehen ist, die zwischen den beiden seitlichen Einschnürungen (25A, 27) liegt und die in einer quer verlaufenden Seite vor dieser Platte (25) mündet, wobei die beiden seitlichen Einschnürungen (25A, 27) in ein Kreisprofil eingeschrieben sind und die mittlere Einschnürung (25A, 27) in ein Längsprofil entlang der Vorwärtsrichtung (Y) ausgehend von der Vorderseite der Platte (25) eingeschrieben ist und einen zweiflächigen Boden definiert, der zur Vorderseite dieser zentralen Einschnürung (25A, 27) gerichtet konvex ist.

12. Tragesystem (1) nach Anspruch 1,
**dadurch gekennzeichnet, dass** mindestens eine der einstellbaren unteren (16), mittleren (19) Anordnungen und einer oberen einstellbaren Anordnung (26) einer Zwischenplatte zum Schutz eines Ansatzstücks (25) einen Trägerkörper der entsprechenden Platte (15, 18, 25) aufweist und einen Aufbau (43) mit einem Nocken (44) und einem Rändelrad (45), von denen der Nocken standardmäßig in gleitendem Eingriff mit der profilierten konkaven Gleitschiene (9) steht, und wobei das Rändelrad durch Schrauben das Anpressen und die Festlegung des Aufbaus der entsprechenden Platte (15, 18, 25) bezüglich der Gleitschiene (9) in einer Blockierstellung in Höhenrichtung (Z) zwischen dem Sockelende (7) und dem oberen Ende (8) sicherstellt.

13. Tragesystem (1) nach Anspruch 1,
**dadurch gekennzeichnet, dass** das Tragesystem (1) eine starre und abnehmbare Befestigungsstruktur (47) eines Rahmens (48) zur Halterung am Boden auf einer hinteren Seite (30) der Stange (6) aufweist, wobei der Rahmen (48) mindestens aufweist:
- eine mittlere Säule (46) in Höhenrichtung,
- einen quer verlaufenden Arm (49) im Wesentlichen auf der Höhe des oberen Endes der Säule (46),
- zwei Stützen (50), die beweglich und ausziehbar sind, die an den seitlichen Enden des Querarms auf Kugelgelenken (50A) montiert sind, und
- zwei Stangen (50B) mit Hohlnuten, die starr an einem oberen Ende und in Querrichtung zu beiden Seiten der Säule (46) montiert sind.

14. Tragesystem (1) nach einem der Ansprüche 1 bis 13,
**dadurch gekennzeichnet, dass** das Tragesystem (1) einen Tragespieß (3) zum Tragen einer Angelrute (2) für die Sportfischerei aufweist,
wobei der Spieß (3) ein oberes Ende (52) seiner Stange (51), eine hufeisenförmige Schelle (53), die gegenüber der Stange (51) in der Vorwärtsrichtung (Y) offen ist, aufweist, und mit einem zylinderförmigen Finger (54) am äußeren Umfang versehen ist und in der Querrichtung (X) vorsteht, wobei der Spieß (3) an einer Stelle auf mittlerer Höhe seiner Stange (51) eine kreisförmige Schelle aufweist, die eine geschlossene Kastenrinne (55) definiert, die gegenüber einem Durchgangsraum für den Spieß im Inneren der Schelle (53) liegt, wobei der Finger (54) komplementär zu einer zusätzlichen Führung (56) eines Kastens (40) ist, der ein Angelzubehör bildet, wobei der Spieß (3) und der Kasten (40) in das Tragesystem (1) integriert werden können.

15. Verfahren (P) zum Aufhängen an einem Tragesystem (1) nach einem der Ansprüche 1 bis 13 zum Aufhängen mindestens eines der folgenden Gegenstände: einer Angelrute (2) und eines Haltespießes (3), **dadurch gekennzeichnet, dass** nach diesem Verfahren (P) die Angelrute (2) oder der Spieß (3) unter einem Näherungswinkel (A) durch eines der Durchgangsöffnungen (17) der Einführ-Zwischenplatte (15) bis zu einem unteren Sockel der Rute (2) oder des Spießes (3) geschoben wird und in einer der Öffnungen (20) der Blockier-Zwischenplatte (18) aufgenommen wird, wonach die Rute (2) oder der Spieß (23) parallel zu der Höhenrichtung (Z) aufgerichtet wird, um quer durch die Öffnung (23) gelagert zu sein und durch eine der entsprechenden Vorrichtungen (22) der Blockier-Zwischenplatte (18) festgestellt zu werden, während ein oberes Ende dieser Rute (2) oder des Spießes (3) in einer der entsprechenden Einschnürungen (25A, 27) der Zwischenplatte (25) zur Aufnahme der Ansatzstücke aufgenommen wird.

## Claims

1. System (1) for carrying fishing accessories, said carrying system (1) comprising at least: one rigid, profiled support (6), one floor-standing base (5) and a plurality of intermediate plates (10, 15, 18, 25), the support (6) extending in an elevation direction (Z) of the system (1) and comprising a bottom elevation end (7) and a top elevation end (8), the support (6) comprising a rail (9) between the bottom and top ends (7, 8), the base (5) extending perpendicularly to the elevation direction (Z) from the bottom elevation end (7) and being rigidly fastened to the support (6), at least three intermediate plates (15, 18, 25) extending perpendicularly to the elevation direction (Z), the system (1) comprising at least:
- one intermediate bottom plate (10) rigidly fastened to an upper face (11) of the base (5), said upper face (11) comprising at least two receiving recesses (12), each receiving recess (12) being in a predetermined position in the frontward direction (Y) and a transverse direction (X) of the system (1), said at least two recesses (12) being arranged on either side of the rail (9) in the transverse direction (X),
- one intermediate threading plate (15) that is rigidly fastened to the rail (9) by a lower adjustable arrangement (16) for vertical adjustment, said plate (15) being provided with at least two through-holes (17), at least one of which is in line with a corresponding recess (12), said carrying system being such that the floor-standing base (5) and the intermediate plates all extend from the same front face (6A) of the support (6), in a frontward direction (Y) of the system (1), the rail (9) of the support (6) being concave and profiled between the bottom and top ends (7, 8), the intermediate plates (15, 18, 25) extending perpendicularly to the elevation direction (Z) so as to be adjustable in the elevation direction, between the base (5) and the top end (8), and the intermediate threading plate (15) is rigidly fastened to the concave profiled rail (9) by a lower adjustable arrangement (16) for vertical adjustment, the carrying system (1) further comprising:
- an intermediate blocking plate (18) that is rigidly fastened to the rail (9) by a median adjustable arrangement (16) for vertical adjustment, said plate (18) being provided with at least two lateral openings (20), which are each respectively above and offset in a frontward and transverse direction from a recess (12), and are in line with a corresponding through-hole (17), each lateral opening (20) having an axis extending in the elevation direction (Z), and having a device (22) comprising an elastically deformable vice having a transverse passage (23) which leads towards the outside of the plate (18) in the transverse direction (X), the intermediate blocking plate (18) having at least two upper support surfaces (24), each (24) of which are in the periphery of a lateral opening (20).

2. Carrying system (1) according to claim 1, **characterised in that** said carrying system (1) comprises an intermediate tip confinement plate (25) that is rigidly fastened to the rail (9) by an upper adjustable arrangement (26) for vertical adjustment, said plate (25) being provided with at least two lateral grooves (25A; 27) for tip protection, at least one groove (25A; 27) being in line with a lateral opening (20) and a transverse hole (17), and having an axis extending in the elevation direction (Z), at least one groove (25A; 27) being arranged on a transverse side of the plate (25) and forming a curved receptacle leading to the outside of the system (1), in the transverse direction (X).

3. Carrying system (1) according to claim 1, **characterised in that** the rigid, profiled support (6) comprises at least one carrying strap (29) integral with the support (6) that is in line with the base (5) at one end and with a blocking plate (18) or confinement plate (25) at the other end, said strap (29) being rendered integral by being attached to a rear face (30) of the support (6) opposite the intermediate plates (15, 18, 25) in the frontward direction (Y).

4. Carrying system (1) according to claim 1, **characterised in that** the base (5) comprises, on a lower face, at least three feet (31) projecting towards the outside of the system (1) in at least one of the elevation (Z) and frontward (Y) directions.

5. Carrying system (1) according to claim 1, **characterised in that** the bottom intermediate plate (10) comprises three recesses (12) arranged in a triangle, the base of which is parallel to the transverse direction (X) and the apex of which, opposite the base in the frontward direction (Y), defines a central recess (12) at the front of the base and opposite the support (6) in said frontward direction (Y).

6. Carrying system (1) according to claim 1, **characterised in that** the intermediate threading plate (15) comprises three through-holes (17), one of which is in line with a bottom receiving recess (12) in the bottom intermediate plate (10), said three holes (17) being arranged in a triangle of which the base is parallel to the transverse direction (X).

7. Carrying system (1) according to claim 1, **characterised in that** the intermediate blocking plate (18) is in the shape of a T perpendicularly to the elevation direction (Z) and comprises at least four lateral openings (20), of which two openings (20) are lateral with respect to the device (22) and the passage (23) and two central openings (20) are aligned in the frontward direction (Y).

8. Carrying system (1) according to claim 1, **characterised in that** each elastically deformable vice device (22) having a passage (23) in the intermediate blocking plate (18) comprises a V-shaped indentation integrally formed with said plate (18) and two elastically deformable hook-shaped tabs (33), one tab (33) being opposite the other tab (33) in a front and transverse median plane (34) of the plate (18), having the passage (23), the dimensions of which in the frontward direction (Y) are less than a corresponding passage spacing (35) between a front end and a rear end of the V-shaped indentation.

9. Carrying system (1) according to claim 8, **characterised in that** the intermediate blocking plate (18) is in the shape of a T perpendicularly to the elevation direction (Z) and comprises at least two V-shaped front openings (20), transversely either side of the support (6) and leading to a front transverse face (36) of said plate (18).

10. Carrying system (1) according to claim 1, **characterised in that** at least one intermediate threading plate (15) and one intermediate blocking plate (18) comprises a U-shaped base plate (37), a lower, rigid base of which is fastened to a corresponding upper face of the plate (15, 18) and two parallel branches (38) of which extend in the elevation direction (Z) and so as to be spaced apart from one another in the transverse direction (X), while the support (6) comprises at least two elastically deformable attachment loops (39) at a distance from one another and from the U-shaped base plate, said loops (39) being arranged for attaching a box (40) to the carrying system (1).

11. Carrying system (1) according to claim 1, **characterised in that** said carrying system (1) comprises an intermediate confinement plate (25) provided with two lateral grooves (25A; 27) and one central groove (25A; 27) which is positioned between the two lateral grooves (25A; 27) and leads into a front transverse face of said plate (25), the two lateral grooves (25A; 27) being made to have a circular profile and the central groove (25A; 27) being made to have an elongate profile in the frontward direction (Y) from the front face of the plate (25) and defining a convex, biplanar indentation towards the front of said central groove (25A; 27).

12. Carrying system (1) according to claim 1, **characterised in that** at least one of the lower adjustable arrangement (16), the median adjustable arrangement (19) and an upper adjustable arrangement (26) of an intermediate tip protection plate (25) comprises a body for supporting the corresponding plate (15, 18, 25) and comprises a cam (44) and wheel (45) assembly (43), the cam of which is in sliding engagement by default with the concave profiled rail (9) and the wheel of which ensures, by being tightened, the pressing and immobilisation of the assembly (43) of the corresponding plate (15, 18, 25), relative to the rail (9), in a blocking position in the elevation direction (Z), between the bottom elevation end (7) and the top elevation end (8).

13. Carrying system (1) according to claim 1, **characterised in that** said carrying system (1) comprises fastening structures (47) that are rigid and can be removed from a ground-anchoring frame (48) on a rear face (30) of the support (6), said frame (48) comprising at least:
- one central elevation column (46),
- one transverse arm (49) substantially at the level of the top elevation end at the top of the column (46),
- two movable and extendible props (50) that are mounted on ball joints (50A) at lateral ends of the transverse arm, and
- two cross bars (50B) that have hollow notches and are rigidly mounted at a top end of the column (46) and transversely either side thereof.

14. Carrying system (1) according to any of claims 1 to 13, **characterised in that** the carrying system (1) comprises a stake (3) for carrying fishing rods (2) for recreational fishing,
the stake (3) having an upper end (52) of its shaft (51), a horseshoe-shaped collar (53), which is open opposite the shaft (51) in the frontward direction (Y) and is provided on the outer periphery with a cylindrical peg (54) projecting in the transverse direction (X), the stake (3) having, in a median position in the elevation of its shaft (51), a circular collar defining a closed ring (55) that is in line with a space through which the stake passes inside the collar (53), the peg (54) being complementary to a complementary guide (56) of a box (40) constituting a fishing accessory, it being possible to integrate the stake (3) and said box (40) in the carrying system (1).

15. Method (P) for attachment to a carrying system (1) according to any of claims 1 to 13, for the attachment of at least one of the following: a fishing rod (2) and a retaining stake (3), **characterised in that**, according to said method (P), the rod (2) or the stake (3) is slid at an angle of approach (A) through one of the through-holes (17) in the intermediate threading plate (15), then the bottom of said rod (2) or stake (3) is received in one of the openings (20) in the intermediate blocking plate (18), following which the rod (2) or the stake (23) is straightened in parallel with the elevation direction (Z) in order to be accommodated through the passage (23) and then immobilised by one of the corresponding devices (22) of the intermediate blocking plate (18), while an upper end of said rod (2) or stake (3) is received in one of the corresponding grooves (25A; 27) in the intermediate tip confinement plate (25).
